# EUROPÄISCHE PATENTSCHRIFT

(11) **EP 2 818 357 B1**
(45) Veröffentlichungstag und Bekanntmachung des Hinweises auf die Patenterteilung: **25.01.2017**
(21) Anmeldenummer: 14163932.8
(22) Anmeldetag: 08.04.2014
(51) Int. Cl.: B60N 2/22, B60N 2/48, B60N 2/38

(54) **Fahrzeugsitz und Nutzkraftfahrzeug mit einem Fahrzeugsitz**
Vehicle seat and commercial motor vehicle with a vehicle seat
Siège de véhicule et véhicule utilitaire doté d'un siège de véhicule

(30) Priorität: 26.06.2013 DE 102013106719; 20.09.2013 DE 102013110448
(43) Veröffentlichungstag der Anmeldung: 31.12.2014
(73) Patentinhaber: GRAMMER AG, 92224 Amberg (DE)
(72) Erfinder: Übelacker, Roland, 92536 Pfreimd (DE); Himmelhuber, Erwin, 92237 Sulzbach-Rosenberg (DE); Delling, Gerhard, 92546 Schmidgaden (DE)
(74) Vertreter: Hannke, Christian

(56) Entgegenhaltungen:
- EP-A1- 2 599 658
- DE-A1- 3 046 049
- US-A- 3 342 528

## Beschreibung

Die Erfindung betrifft einen Fahrzeugsitz, insbesondere einen Nutzkraftfahrzeugsitz, mit einem Sitzteil, mit einer Rückenlehne umfassend ein Rückenlehnenunterteil und ein Rückenlehnenoberteil und mit einer Haltevorrichtung, mittels welcher das Rückenlehnenoberteil gegenüber dem Rückenlehnenunterteil verlagerbar gehaltert ist.

Darüber hinaus betrifft die Erfindung ein Nutzkraftfahrzeug, insbesondere ein landwirtschaftliches Nutzkraftfahrzeug, mit wenigstens einem Fahrzeugsitz.

Gattungsgemäße Fahrzeugsitze insbesondere für Nutzkraftfahrzeuge und speziell für landwirtschaftliche Nutzkraftfahrzeuge sind aus dem Stand der Technik vielfältig und gut bekannt.

Insbesondere Fahrzeugführer von landwirtschaftlichen Nutzkraftfahrzeugen nehmen bei ihrer Arbeit mit diesen landwirtschaftlichen Nutzkraftfahrzeugen und daran angehängten Arbeitsgeräten oftmals über einen längeren Zeitraum eine von der normalen nach vorne, also in Fahrrichtung, gerichteten Fahrsitzhaltung eine seitlich oder rückwärtig ausgerichtete weitere Sitzarbeitshaltung ein, um beispielsweise seitlich hinten in der Fahrzeugkabine angeordnete Bedienorgane besser erreichen und bedienen zu können, oder auch nur um ein hinter dem landwirtschaftlichen Nutzkraftfahrzeug angehängtes Arbeitsgerät für einen längeren Zeitraum besser beobachten zu können.

Um dem Fahrzeugführer bei dieser seitlich oder rückwärtig ausgerichteten Sitzarbeitshaltung einen bedientechnisch erleichterten Zugang zu rückwärtig angeordneten Bedienorganen oder auch nur optisch einen rückwärtigen Arbeitsbereich hinter einem Fahrzeugsitz besser einsehen bzw. beobachten zu können, ist aus der Offenlegungsschrift DE 30 46 049 A1 ein Fahrersitz bekannt, bei welchem die Rückenlehne zumindest zweigeteilt ist und hierbei dementsprechend über ein oberes Rückenlehnenteil und ein unteres Rückenlehnenteil verfügt, wobei zumindest das obere Rückenlehnenteil um eine vertikale Achse verschwenkbar ist. Hierdurch kann der Fahrer sich jederzeit mit seinem oberen Rumpfbereich bzw. Oberkörper drehen, um beispielsweise die hinter dem Fahrzeugsitz liegenden Bedienorgane zu erreichen, da sich das obere Rückenlehnenteil um diese vertikale Achse drehen kann. Zwar kann der Fahrzeugführer hierbei über das untere Rückenlehnenteil hinweg problemlos nach hinten greifen, da das obere Rückenlehnenteil um die vertikale Achse gedreht ist, jedoch erfährt der Fahrzeugführer bei dieser Lösung keinerlei oder nur eine sehr unzureichende Abstützung seines Oberkörpers bei einer entsprechend seitlich oder rückwärtig ausgerichteten Sitzarbeitshaltung. Insofern wird der Fahrzeugführer durch das obere Rückenlehnenteil kaum nennenswert gestützt.

Bei einer anderen jüngeren Lösung können Fahrzeugführer zwischenzeitlich den gesamten Fahrzeugsitz, also die im Wesentlichen gesamte starre Sitzkonstruktion mitsamt dem Sitzteil und der Rückenlehne, mit Hilfe eines Drehadapters um eine definierte Drehhochachse drehen, um einen rückwärtigen Raum innerhalb der Fahrzeugkabine besser erreichen bzw. außerhalb der Fahrzeugkabine besser beobachten zu können. Dabei bleibt das Sitzteil in Relation zur gesamten Rückenlehne fest stehen. Etwaige Anbauteile am Fahrzeugsitz, beispielsweise eine Multifunktionsarmlehne, drehen sich ebenso in Relation dazu mit. Bedienhebel aber, die weiter hinten seitlich in der Fahrzeugkabine angeordnet sind, können dadurch immer noch nicht komfortabel betätigt werden.

Die letztgenannte Lösung führt darüber hinaus dazu, dass der Fahrzeugführer sich aus einer komfortablen Sitzpolsterkontur des Fahrzeugsitzes herausdrehen muss, um insbesondere die Pedalerie des landwirtschaftlichen Nutzkraftfahrzeugs weiter einigermaßen betriebssicher betätigen zu können. Dies wiederum kann zu Druckstellen und damit zu einem Diskomfort speziell im Gesäß- und Oberschenkelbereich des Fahrzeugführers führen.

Speziell die Rückenpolsterkontur ist aktuell derart ausgeformt, dass der Fahrzeugführer in der vorwärts gerichteten Fahrsitzhaltung maximal möglich gestützt wird, ohne ihm die notwendigen Freiheitsgrade zu nehmen, die er für seine Bewegungen im Fahrbetrieb benötigt. Um eine Bewegungsfreiheit im Schulter-Armbereich nicht zu behindern, darf das Rückenpolster der Rückenlehne im oberen Bereich nicht zu sehr konturiert sein. Um jedoch eine gute Abstützung und damit eine ausreichend gute Entlastung des Fahrzeugführers zu gewährleisten, sollte eine Abstützfläche in allen Fahrpositionen immer möglichst groß sein. Dies kann aus den vorher genannten Gründen, wie etwa die erforderlichen Freiheitsgrade für eine gute Bewegung, aktuell nur bedingt und daher unbefriedigend erzielt werden, da der Fahrer zwischen zwei extrem unterschiedlichen Fahrpositionen wechselt.

Ein weiterer großer Nachteil ist darin zu sehen, dass der mögliche Schwenkbereich des Drehadapters dadurch limitiert ist, dass das Nutzkraftfahrzeug trotz der Beobachtung der hinteren Arbeitsgeräte weiter über die Pedalerie und das Lenkrad verkehrssicher gesteuert werden muss. Um diesen Ansprüchen gerecht zu werden, muss der Fahrzeugführer oftmals über einen längeren Zeitraum eine Zwangshaltung einnehmen, welche unweigerlich zu einer kritischen Torsion des gesamten Körpers führt. Wissenschaftliche Untersuchungen zeigen zudem, dass eine derartige Zwangshaltung insbesondere unter Schwingungsbelastung zur Schädigung der Körperstrukturen führen kann, speziell wenn der Körper nicht ausreichend gut unterstützt wird. Des Weiteren steht fest, dass die Belastung der Wirbelsäule durch eine gute Abstützung über das Rückenlehnenteil signifikant reduziert werden kann.

Ein gattungsgemässer Fahrzeugsitz ist aus dem Dokument EP2599658A1 benannt.

Es ist Aufgabe der Erfindung, einem Fahrzeugführer einen verbesserten Sitzkomfort speziell bei einer Einnahme einer derartigen Zwangshaltung zu bieten, um insbesondere ein landwirtschaftliches Nutzkraftfahrzeug betriebssicherer und insbesondere verkehrssicherer führen zu können. Zudem ist es eine weitere Aufgabe der Erfindung, den Fahrzeugführer bei der Einnahme dieser Zwangshaltung vor einer vorzeitigen Ermüdung zu bewahren.

Die Aufgabe der Erfindung wird von einem Fahrzeugsitz gemäss Anspruch 1 gelöst.

Die vorliegende Führungsrolleneinrichtung eignet sich besonders gut eine verschleißarme und damit auch eine dauerhaft spielfreie Lagerung des Rückenlehnenoberteils zu gewährleisten, mittels welcher selbst große Abstützkräfte aufgenommen und übertragen werden können. Dies ist besonders wichtig bei starken Stoßbelastungen, wie sie insbesondere an landwirtschaftlich genutzten Nutzkraftfahrzeugen häufig auftreten.

Ist insbesondere ein Nutzkraftfahrzeugsitz mit einer derartigen Führungsrolleneinrichtung ausgerüstet, gelingt es den Fahrzeugführer bei einer nach hinten gerichteten Zwangsarbeitshaltung besonders gut abzustützen, ohne dass hierbei das Rückenlehnenoberteil der Rückenlehne ihm den Zugang an hinter dem Fahrzeugsitz befindlichen Bedienorganen bzw. die Sicht auf ein durch das Nutzkraftfahrzeug geschlepptes Arbeitsgerät versperrt.

Im Gegensatz zu den aus dem Stand der Technik bekannten Lösungen, kann mittels des Rückenlehnenoberteils nunmehr zusätzlich der Fahrzeugführerrumpf bei einer seitlich nach hinten gerichteten Zwangshaltung vorteilhaft abgestützt werden, wodurch eine besonders vorteilhafte Entlastung der Körperstrukturen bzw. der Körperrumpfstrukturen des Fahrzeugführers erzielt wird, so dass auch eine vorzeitige Ermüdung verhindert und damit auch die Arbeitseffizienz erhöht werden kann.

Mithilfe der erfindungsgemäßen Führungsrolleneinrichtung gelingt es auf konstruktiv besonders einfache Weise das Rückenlehnenoberteil aus einer direkt oberhalb des Rückenlehnenunterteils platzierten Parkposition, welche bevorzugt mittig der Rückenlehne positioniert ist, hinaus und bis in eine seitlich der Rückenlehne befindliche Abstützlage hinein zu verschieben, um dort eine zusätzliche Fahrzeugführerrumpfabstützung zu ermöglichen.

Um verschiedenste Effekte hinsichtlich der Führungsrolleneinrichtung erzielen zu können, kann diese vielfältig ausgestaltet sein, wie nachstehend noch erläutert ist.

Der Begriff "Sitzteil" umschreibt im Sinne der Erfindung denjenigen Bereich des Fahrzeugsitzes, auf welchem der Fahrzeugführer mit seinem Gesäß Platz nimmt. Insofern gestaltet das Sitzteil mithilfe von Sitzteilpolsterelementen eine entsprechende Sitzfläche aus.

Dementsprechend beschreibt der Begriff "Rückenlehne" einen Bereich des Fahrzeugsitzes, an welchem sich der Fahrzeugführer im Wesentlichen mit seinem Rücken abstützen kann, während er auf dem Sitzteil sitzt. Die Rückenlehne erstreckt sich demnach vom hinteren Ende des Sitzteils aus hochwärts über das Sitzteil hinaus.

Hierbei ist die Rückenlehne in ein Rückenlehnenoberteil und in ein Rückenlehnenunterteil gegliedert, wobei das Rückenlehnenoberteil mittels der Führungsrolleneinrichtung gegenüber dem Rückenlehnenunterteil und damit auch gegenüber dem Sitzteil verschieblich gelagert ist.

Das Rückenlehnenunterteil ist vorzugsweise ortsfest gegenüber dem Sitzteil an dem Fahrzeugsitz angeordnet. Dies ist jedoch nicht zwingend erforderlich. Das Rückenlehnenunterteil stellt somit einen gegenüber dem Sitzteil ortsfesten Teil der Rückenlehne dar.

Insofern stellt das Rückenlehnenoberteil einen gegenüber dem Sitzteil seitlich verschieblichen Teil der Rückenlehne dar.

Hierzu ist die Haltevorrichtung vorgesehen, welche idealerweise unmittelbar an dem Rückenlehnenunterteil befestigt ist, um das Rückenlehnenoberteil gegenüber diesem Rückenlehnenunterteil entlang einer Verlagerungskurve verschieben zu können. Es ist jedoch bei entsprechender Ausgestaltung des Fahrzeugsitzes auch möglich, dass diese Haltevorrichtung an einem anderen Bereich der Rückenlehne bzw. an einem Gestell des Fahrzeugsitzes vorgesehen ist. Alternativ kann diese Haltevorrichtung auch karosserieseitig des jeweiligen Nutzkraftfahrzeuges vorgesehen sein, um das Rückenlehnenoberteil gegenüber dem Rückenlehnenunterteil entsprechend linearverschieblich haltern bzw. lagern zu können.

Jedenfalls kann mit dem vorliegenden Rückenlehnenoberteil im Sinne der Erfindung eine außerhalb des Sitzteils und der Rückenlehne anordenbare zusätzliche Fahrzeugführerrumpfabstützeinrichtung bereitgestellt werden, um den Fahrzeugführer in der Zwangshaltung hinsichtlich einer seitlich oder rückwärtig ausgerichteten Sitzarbeitshaltung zusätzlich abzustützen.

Demnach gelingt mit diesem erfindungsgemäß geführten Rückenlehnenoberteil einerseits eine erhebliche Sitzkomfortverbesserung.

Andererseits wird der Fahrzeugführer darüber hinaus auch vor einer vorzeitigen Ermüdung geschützt, insbesondere wenn er über einen langen Zeitraum den rückwärtigen Bereich des Nutzkraftfahrzeugs visuell überwachen muss. Speziell hierdurch wird die Unfallgefahr erheblich reduziert und somit die Arbeitssicherheit erhöht.

Das Rückenlehnenoberteil bzw. die durch dieses verkörperte Fahrzeugführerrumpfabstützeinrichtung sind zumindest teilweise in einem ansonsten fahrzeugsitzfreien Abstützbereich in Höhe des Bereichs der oberen Hälfte von der Rückenlehne und außer mittig seitlich der Rückenlehne temporär derart anordenbar, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außer mittig seitlich der Rückenlehne abgestützt ist, wobei die zusätzliche Fahrzeugführerrumpfabstützeinrichtung mit einer Verlagerungseinrichtung von der Parkposition in eine zusätzliche Abstützlage in dem ansonsten fahrzeugsitzfreien Abstützbereich verlagerbar angeordnet ist.

Im vorliegenden Fall handelt es sich bei der Verlagerungseinrichtung um die Führungsrolleneinrichtung.

Vorteilhafterweise kann der Fahrzeugführer durch die derart angeordnete zusätzliche Fahrzeugführerrumpfabstützeinrichtung während einer Zwangshaltungseinnahme, insbesondere der vorstehend beschrieben seitlich oder rückwärtig ausgerichteten Sitzarbeitsstellung, außerordentlich gut entlastet werden. Und vorzugsweise zwar nur dann, wenn es erforderlich ist, steht die zusätzliche Fahrzeugführerrumpfabstützeinrichtung zur Verfügung. Ansonsten, etwa in einer vorwärts ausgerichteten Fahrposition, stört die zusätzliche Fahrzeugführerrumpfabstützeinrichtung nicht, da sie in ihrer Ruhelage bzw. angestammten Parkposition verbleibt.

Vorteilhaft ist die zusätzliche Fahrzeugführerrumpfabstützeinrichtung und somit auch das Rückenlehnenoberteil, derart anordenbar, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außermittig seitlich der Rückenlehne abgestützt ist.

Der Begriff "zusätzliche Fahrzeugführerrumpfabstützeinrichtung" beschreibt im Sinne der Erfindung eine Einrichtung zur zusätzlichen Rumpfabstützung des Fahrzeugführers während einer Zwangshaltung am Fahrzeugsitz. Die konstruktive Umsetzung dieser zusätzlichen Fahrzeugführerrumpfabstützeinrichtung gelingt mit dem hier beschriebenen Rückenlehnenoberteil baulich besonders einfach, so dass bei entsprechender konstruktiver Ausgestaltung beide Begriffe synonym verwendet werden können.

In vorliegendem Zusammenhang beschreibt die Begrifflichkeit "Rumpf" anatomisch den zentralen Bereich eines menschlichen Körpers und der Rumpf umfasst den Brustkorb, den Bauch, den Rücken sowie das Becken des menschlichen Körpers.

Insofern ist es vorteilhaft, wenn die zusätzliche Fahrzeugführerrumpfabstützeinrichtung eine Anlagefläche für einen Rücken- und/oder Schulterbereich eines Fahrzeugführers umfasst, wobei die Anlagefläche vorteilhafter Weise ergonomisch geformt ist, um der menschlichen Körperanatomie besonders gut zu entsprechen. Erst dies fördert besonders die Akzeptanz beim Fahrzeugführer eine derartige zusätzliche Rumpfabstützung häufig zu gebrauchen. Zumal ist der Körper des Fahrzeugführers durch eine derartige Anlagefläche vor Verletzungen gut geschützt, da es speziell im Einsatz mit landwirtschaftlichen Nutzfahrzeugen im Arbeitsbetrieb auf dem Acker oftmals sehr rau zugeht und der Fahrzeugführer hierbei für jede gezielte Rumpfabstützung dankbar ist.

Aber nicht nur eine derart entsprechend ausgeformte Anlagefläche ist vorteilhaft. Vielmehr ist es noch besser, diese Anlagefläche im Raum auch richtig ausgerichtet zu platzieren. Dies gelingt mit vorliegender Führungsrolleneinrichtung auf konstruktiv erstaunlich einfache und besonders effektive Weise, wie im Zusammenhang mit dem Rückenlehnenoberteil ausführlich erläutert.

Mit dem Begriff "fahrzeugsitzfreier Rumpfabstützbereich" ist im Sinne der Erfindung ein Bereich am Fahrzeugsitz beschrieben, in welchem permanente Abstützeinrichtungen des Fahrzeugsitzes nicht sinnvoll dauerhaft angeordnet sein können, da sie im normalen Fahrbetrieb zu sehr störend auf den Fahrzeugführer wirken würden.

Der vorliegende fahrzeugsitzfreie Rumpfabstützbereich liegt hierbei einerseits im Wesentlichen im oberen Drittel der Rückenlehne, also oberhalb der halben Höhe der Rückenlehne und damit oftmals auch im unmittelbaren Sichtbereich seitlichen bzw. rückwärtigen Sichtbereich des Fahrzeugführers. Er kann sich auch noch bis oberhalb des oberen Drittels erstrecken. Allein deshalb ist dieser fahrzeugsitzfreie Rumpfabstützbereich zumindest im normalen Vorwärtsfahrbetrieb unbedingt freizuhalten. Demnach ist er nicht mit einem herkömmlichen Abstützbereich zu verwechseln. Andererseits befindet sich der fahrzeugsitzfreie Rumpfabstützbereich im Sinne der Erfindung außermittig der Rückenlehne. Allein hierdurch ist er nicht mit einem herkömmlichen Abstützbereich zu verwechseln, in welchem eine Kopfstütze platziert ist. Erst recht nicht, da der fahrzeugsitzfreie Rumpfabstützbereich zudem vor der Rückenlehne bzw. einem Rückenlehnenpolsterteilelement und seitlich hiervon angeordnet ist. Insofern ist der vorliegende fahrzeugsitzfreie Rumpfabstützbereich auch seitlich und oberhalb des Sitzteils des Fahrzeugsitzes vorgesehen.

Die Beschreibung "seitlich oder rückwärtig ausgerichteten Sitzarbeitshaltung" formuliert vorliegend eine Zwangshaltung des Fahrzeugführers bezüglich einer Oberkörperdrehung, um hierbei einen rückseitigen Arbeitsbereich insbesondere hinter dem landwirtschaftlichen Nutzfahrzeug besser beobachten zu können.

An dieser Stelle sei darauf hingewiesen, dass der vorliegende erfinderische Fahrzeugsitz nicht nur hinsichtlich eines Fahrzeugführers vorteilhaft eingesetzt werden kann. Vielmehr ist der erfindungsgemäße Fahrzeugsitz nahezu in jedem Anwendungsbereich einsetzbar, in welchem im Umfeld des Fahrzeugsitzes zumindest temporär eine zusätzliche Rumpfabstützung bereitgestellt werden soll.

Besonders stabil kann die zusätzliche Fahrzeugführerrumpfabstützeinrichtung von der Parkposition in die zusätzliche Rumpfabstützlage bzw. Abstützlage hinein verlagert werden, wenn die Verlagerungseinrichtung Mittel zum translatorischen Verlagern der zusätzlichen Fahrzeugführerrumpfabstützeinrichtung aufweist, wie dies mit der vorliegenden Führungsrolleneinrichtung hinsichtlich des Rückenlehnenoberteils der Fall ist.

Eine in diesem Zusammenhang besonders vorteilhafte Ausführungsvariante sieht vor, dass die Führungsrolleneinrichtung derart ausgestaltet ist, dass das Rückenlehnenoberteil beim seitlichen Verlagern zusätzlich um die Verlagerungskurve und/oder um eine quer zu der Verlagerungskurve verlaufende Querachse dreht.

Die vorliegende Fahrzeugführerrumpfabstützung wird nicht nur allein dadurch erzielt, dass das Rückenlehnenoberteil entlang der Verlagerungskurve seitlich über wenigstens einen der Seitenränder des Rückenlehnenunterteils linearverschieblich ist, sondern dass darüber hinaus das Rückenlehnenoberteil hierbei zusätzlich noch um diese Verlagerungsachse dreht, wodurch das Rückenlehnenoberteil sogleich nach hinten geneigt wird, wodurch insbesondere eine Abstützfläche für den Fahrzeugführerrumpf außergewöhnlich gut ausgerichtet in einem ansonsten fahrzeugsitzfreien Abstützbereich positioniert wird.

Diese Abstützfläche kann besonders gut mit an dem Rückenlehnenoberteil entsprechend vorgesehenen Rückenlehnenpolsterteilen ausgestaltet sein, wobei diese Rückenlehnenpolsterteile somit mit dem Rückenlehnenoberteil linearverschieblich sind.

Es versteht sich, dass dementsprechend das Rückenlehnenoberteil, aber auch das Rückenlehnenunterteil jeweils über Polsterteile zum Polstern der Rückenlehne insgesamt verfügen können, wobei diese Polsterteile entsprechend verschieblich zueinander angeordnet sind.

Kumulativ oder alternativ dreht das Rückenlehnenoberteil bei dessen seitlichen Verlagern um eine quer zur Längsverlagerungsachse verlaufenden Querachse, wodurch das Rückenlehnenoberteil zusätzlich noch um diese Querachse bezogen auf die Breitenerstreckung des Rückenlehnenoberteils nach unten geneigt werden kann, wodurch der Abstützkomfort für den Fahrzeugführer noch weiter erhöht werden kann.

Die Breitenerstreckung des Rückenlehnenoberteils fluchtet im Wesentlichen mit der Fahrzeugbreitenerstreckung, insbesondere wenn sich das Rückenlehnenoberteil in seiner Parkposition befindet.

Bei der Querachse handelt es sich im Wesentlichen um eine Horizontalachse, die quer zur Verlagerungskurve angeordnet ist.

Die Verlagerungskurve verläuft hierbei idealweise quer zu der dem Fahrzeugsitz inne wohnende Hauptsitzrichtung, wobei die Hauptsitzrichtung im Normalfall in Richtung der Fahrzeuglängserstreckung verläuft. Somit kann das Rückenlehnenoberteil in einen seitlichen Bereich des Fahrzeugsitzes hinein verschoben und damit bei Bedarf derart vorteilhaft umplatziert werden, dass der Fahrzeugführer sich mit seinem Schulter-Armbereich bis über das Rückenlehnenunterteil drehen bzw. beugen kann, wo zuvor noch das Rückenlehnenoberteil in seiner Parkposition angeordnet war und hierbei dennoch im oberen Bereich seines Rückens von dem in die Abstützlage hinein verschobenen Rückenlehnenoberteil gestützt werden kann.

Bei der Verlagerungskurve kann es sich um eine körperliche Bauteilachse oder um eine fiktive Achse außerhalb eines oder mehrerer Bauteile oder eine Bauteilgruppe handeln.

Insofern ist es vorteilhaft, wenn die Verlagerungskurve quer zur Hauptsitzrichtung des Fahrzeugsitzes verlaufend angeordnet ist.

Die Verlagerungskurve erstreckt sich vorliegend idealerweise in der Hauptverschieberichtung, in welche das Rückenlehnenoberteil seitlich über den Seitenrand des Rückenlehnenunterteils hinaus verschoben wird.

Der zuvor beschriebene Bewegungsablauf des Rückenlehnenoberteils kann konstruktiv besonders einfach umgesetzt werden, wenn die Führungsrolleneinrichtung zumindest teilweise helixförmig ausgestaltet ist.

Beispielsweise umfasst die Führungsrolleneinrichtung hierzu ein oder mehrere Führungselemente, welche sich helixförmig, das heißt schraubenförmig, um die Verlagerungskurve herum erstreckend angeordnet sind, sodass das Rückenlehnenoberteil im Falle einer entsprechenden Linearverschiebung konstruktiv einfach um diese Verlagerungskurve drehbar ist.

Insofern ist das Rückenlehnenoberteil in diesem Fall vorteilhafterweise in Abhängigkeit einer Linearverschiebung drehbar um die Verlagerungskurve gelagert.

Im Sinne der Erfindung werden vorliegend unter dem Begriff "Führungselemente" I längliche rollengeführte Führungselemente verstanden, welche rollenkörpergelagert sind. Es ist klar, dass auch mehr als zwei solcher Führungselemente vorgesehen werden können, wodurch die Stabilität der Linearführungsrollenvorrichtung erhöht werden kann; jedoch verkompliziert sich hierdurch auch der konstruktive Aufwand entsprechend.

Es versteht sich, dass sich derartige helixförmige Führungselemente in vielfältiger Weise konstruktiv realisieren lassen, um hierdurch die Linearführungseinrichtung zumindest teilweise helixförmig auszugestalten. Beispielsweise ist ein derartiges mit Führungsnuten und/oder Führungsstegen ausgestattetes Führungselement entlang der Verlagerungskurve in sich verdreht.

Es hat sich in Praxistests herausgestellt, dass die Haltevorrichtung und insbesondere die Führungsrolleneinrichtung hiervon sehr große Fahrzeugführerrumpfabstützkräfte aufnehmen können, wenn die Führungsrolleneinrichtung zwei übereinander und voneinander beabstandet angeordnete Führungselemente umfasst, wobei eines der Führungselemente im Verlauf der Verlagerungskurve gegenüber dem anderen der Führungselemente verschieden positioniert ist.

Das heißt mit anderen Worten, dass das eine Führungselement in Richtung der Verlagerungskurve zumindest teilweise mit einer veränderten Lage gegenüber dem anderen Führungselement angeordnet ist.

Hierbei formulieren das erste Führungselement eine erste Kurvenbahn und das zweite Führungselement eine zweite Kurvenbahn, welche zumindest teilweise mit einem sich verändernden Achsversatz zueinander angeordnet sind. Insofern sind die beiden Führungselemente mit einem sich verändernden Achsversatz ortsfest zueinander angeordnet. Hierdurch sind die beiden Kurvenbahnen zumindest bereichsweise windschief zueinander angeordnet. Sind die beiden nebeneinander aber voneinander beabstandet angeordneten Führungselemente mit einem derartigen Verlauf zueinander angeordnet bzw. ausgerichtet, kann konstruktiv besonders einfach ein Achsversatz bezüglich dieser beiden Führungselemente erzielt werden, wodurch das Rückenlehnenoberteil beim seitlichen Verlagern um die Verlagerungskurve im Sinne der Erfindung geneigt werden kann.

Eine derartige Linearverschiebung des Rückenlehnenoberteils kann beispielsweise pneumatisch oder hydraulisch mit entsprechenden Pneumatik- bzw. Hydraulikzylinderelementen erfolgen.

Ein besonders einfach bauender Mechanismus hinsichtlich der Führungsrolleneinrichtung kann jedoch erzielt werden, wenn die Verschiebung manuell, gegebenenfalls noch durch ein oder mehrere Federelemente mechanisch unterstützt, erfolgt.

Um einen außergewöhnlich guten Spielausgleich zwischen den Führungselementen und den Rollenelementen gewährleisten zu können, ist es vorgesehen, dass die Führungsrolleneinrichtung eine Rollenelementeanordnung zum Führen eines Führungsrollenelements mit einem oder mehr Festlager-Rollenelemente und mit einem oder mehr Loslager-Rollenelemente umfasst.

Eine derartige Rollenelementeanordnung kann vorliegend aus einer nahezu beliebig hohen Anzahl und nahezu beliebig zueinander positionierten Rollenelementen bestehen, welche mit dem jeweiligen Führungselement wechselwirken.

Derartige Rollenelementeanordnungen werden später beispielhaft noch erläutert.

Eine sehr gute Führung der Führungselemente kann konstruktiv einfach erzielt werden, wenn die Führungsrolleneinrichtung eine Rollenelementeanordnung zum Führen eines Führungselements mit zwei Festlager-Rollenelementen und wenigstens einem Loslager-Rollenelement umfasst, oder umgekehrt.

Es hat sich zudem in Praxistests herausgestellt, dass ein Führungselement sowohl mit zwei Festlager-Rollenelementen und einem einzigen Loslager-Rollenelement ausreichend spielfrei geführt werden kann, oder mit nur einem Festlager-Rollenelement und zwei Loslager-Rollenelementen.

Insofern ist eine Rollenelementeanordnung mit wenigstens drei Rollenelementen pro Führungselement vorteilhaft.

Es versteht sich, dass die Loslager-Rollenelemente in vielfältiger Weise vorgespannt gegenüber einem oder mehreren Festlager-Rollenelementen sein können. Der konstruktive Aufbau der vorliegenden Linearführungseinrichtung kann vorteilhaft weiter reduziert werden, wenn zwei Loslager-Rollenelemente durch ein gemeinsames Federelement gegenüber wenigstens einem Festlager-Rollenelement vorgespannt angeordnet ist.

Vorliegend eignen sich zum Aufbau einer geeigneten Vorspannung der Loslager-Rollenelemente unterschiedlich gestaltete Federelemente, wobei sich als baulich sehr einfache Variante ein Blattfederelement zum Vorspannen der Loslager-Rollenelemente bewährt hat.

Darüber hinaus ist es vorteilhaft, wenn die Führungsrolleneinrichtung wenigstens ein Rollenelementepaar mit einem ortsfesten Rollenelement und mit einem gegenüber dem ortsfesten Rollenelement verlagerbaren Rollenelement umfasst.

Vorliegend ist das Festlager-Rollenelement ein ortsfestes, aber drehbares Rollenelement und das Loslager-Rollenelement ein verlagerbares Rollenelement. Somit können diese Begriffe hier synonym verwendet werden.

Das verlagerbare Rollenelement ist hierbei vorzugsweise federvorgespannt gelagert, sodass eine spielfreie Führung des Führungselements gewährleistet werden kann.

Mithilfe eines derartigen Rollenelementepaars kann ein Führungselement somit im Sinne der Erfindung mit der Führungsrolleneinrichtung besonders spielfrei zwischen einer Ausgangslage und einer Endlage der Führungsrolleneinrichtung geführt werden.

Der konstruktive Aufwand hinsichtlich der Führungsrolleneinrichtung kann nochmals reduziert werden, wenn die Führungsrolleneinrichtung wenigstens einen Rollenhalteapparat umfasst, an welchem die Rollenelementeanordnungen und/oder die Rollenelementepaare von wenigstens zwei voneinander beabstandeten Führungsbahnen zum Führen von wenigstens zwei nebeneinander beabstandeten Führungselementen gehaltert sind.

Beispielsweise ist der Rollenhalteapparat der Führungsrolleneinrichtung derart aufgebaut, dass wenigstens zwei entlang der Verlagerungsachse voneinander beabstandete Rollenelementepaare gehaltert sind.

Die Rollenelementeanordnungen können weiter vorteilhaft variiert werden, wenn die Führungsrolleneinrichtung wenigstens zwei voneinander beabstandete Führungsbahnen zum Führen von wenigstens zwei nebeneinander und voneinander beabstandet angeordneten Führungselementen umfasst, wobei wenigstens ein Rollenelement einer der zwei voneinander beabstandeten Führungsbahnen gegenüber wenigstens einem Rollenelement einer anderen der zwei voneinander beabstandeten Führungsbahnen hinsichtlich ihrer Führungsflächen unterschiedlich im Raum orientiert sind.

Beispielsweise ist ein erstes Rollenelement bzw. mehrere erste Rollenelemente zum Führen eines ersten Führungselements hinsichtlich der Führungsfläche bzw. Führungsflächen verti kal ausgerichtet, während ein weiteren Rollenelement oder mehrere weiterer Rollenelemente zum Führen eines weiteren Führungselements hinsichtlich der Führungsflächen im Wesentlichen horizontal ausgerichtet sind.

In diesem Zusammenhang ist es vorteilhaft, wenn die Drehachsen von Rollenelementen zum Führen eines ersten Führungselements und wenigstens eine Drehachse von Rollenelementen zum Führen eines weiteren Führungselements zueinander unterschiedlich im Raum orientiert angeordnet sind, also nicht parallel zueinander verlaufen.

Beispielsweise ist das weitere Führungselement lediglich mit einem einzigen Rollenelement geführt, welches anders orientiert ist als die ersten Rollenelemente hinsichtlich des ersten Führungselements.

Es versteht sich, dass zwischen den unterschiedlich im Raum ausgerichteten Drehachsen unterschiedliche Winkel eingestellt werden können. Vorzugsweise sind diese Drehachsen rechtwinklig zueinander im Raum angeordnet.

Insbesondere können diese Drehachsen auch windschief zueinander angeordnet sein.

Es versteht sich, dass je nach den an die Führungsrolleneinrichtung gestellten Anforderungen anstelle von einzelnen Rollenelementen kumulativ auch Gleitelemente eingesetzt werden können, um gewünschte Führungseigenschaften bzw. -effekte erzielen zu können.

Idealerweise sind hierbei dann die verlagerbaren Rollenelemente durch entsprechende verlagerbare Gleitelemente ersetzt, da die Gleitelemente konstruktiv weniger aufwendig, insbesondere hinsichtlich einer Federvorspannung, an der Führungsrolleneinrichtung bzw. insbesondere an dem vorgesehenen Rollenhalteapparat der Führungsrolleneinrichtung gelagert werden können.

Insofern sieht eine alternative Ausführungsvariante vor, dass die Führungsrolleneinrichtung kumulativ oder alternativ zu Loslager-Rollenelemente auch Loslager-Gleitelemente anstelle von Fest-Lagergleitelementen umfassen kann.

Es versteht sich, dass entsprechende Führungselemente in nahezu beliebiger Ausgestaltung und Anordnung an der Führungsrolleneinrichtung vorgesehen sein können.

Auch entsprechend den Führungselementen ausgestaltete Rollenelemente können dementsprechend in nahezu beliebiger Ausgestaltung und Anordnung an der Führungsrolleneinrichtung vorhanden sein.

Die vorliegende Führungsrolleneinrichtung lässt sich baulich besonders platzsparend in dem Fahrzeugsitz integrieren, wenn die Führungsrolleneinrichtung Stangen- und/oder Rohrführungselemente aufweist, welche innerhalb des Rückenlehnenoberteils angeordnet sind.

Idealerweise sind diese Stangen- und/oder Rohrführungselemente vollständig in dem Rückenlehnenoberteil integriert, sie können bei entsprechender Ausgestaltung jedoch auch nur teilweise innerhalb des Rückenlehnenoberteils angeordnet sein.

Jedenfalls kann das Rückenlehnenoberteil mithilfe dieser Stangen- und/oder Rohrführungselemente entlang der Verlagerungskurve verschoben werden, sodass das Rückenlehnenoberteil zumindest teilweise in den ansonsten fahrzeugsitzfreien Rumpfabstützbereich hinein geschoben werden kann.

Vorteilhafterweise sind die Stangen- und/oder Rohrführungselemente derart innerhalb des Rückenlehnenoberteils angeordnet, dass sie gemeinsam mit dem Rückenlehnenoberteil verlagert werden, um die Verlagerungskurve zumindest teilweise auszugestalten. Hierdurch kann gewährleistet werden, dass bei einer Verlagerung die Stangen- und/oder Rohrführungselemente gemeinsam mit dem Rückenlehnenoberteil in den ansonsten fahrzeugsitzfreien Rumpfabstützbereich vollständig verschoben werden, sodass oberhalb des Rückenlehnenunterteils ein Bauteilkomponenten freier Bereich im oberen Bereich der Rückenlehne am Fahrzeugsitz geschaffen werden kann.

Um derartige Führungselemente betriebssicher führen zu können, ist es vorteilhaft, wenn die Führungsrolleneinrichtung Rollenelemente aufweist, welche an dem Rückenlehnenunterteil angeordnet sind und an welchen Stangen- und/oder Rohrführungselemente quer zur Hauptsitzrichtung geführt sind.

An dieser Stelle sei darauf hingewiesen, dass derartige Rollenelemente nicht zwingend an dem Rückenlehnenunterteil befestigt sein müssen. Vielmehr können bei entsprechender Ausgestaltung diese auch an anderen Bereichen der Rückenlehne oder an einem dem Fahrzeugsitz nebengeordneten Gestell oder dergleichen angeordnet sein.

Vorteilhafterweise sind diese Rollenelemente ortsfest an dem Rückenlehnenunterteil angeordnet, sodass sich ein besonders einfacher Aufbau einer mit der Führungsrolleneinrichtung ausgestalteten bzw. ausgestatteten Haltevorrichtung realisieren lässt.

Des Weiteren sieht eine vorteilhafte Ausführungsvariante vor, dass die Führungsrolleneinrichtung eine mindestens einmal, vorzugsweise eine mehrfach, gebogene Verlagerungskurve aufweist.

Beispielsweise reicht bereits eine nur einmal gebogene Verlagerungskurve dazu aus, das Rückenlehnenoberteil in eine Abstützlage hinein zu verschieben, welche unterhalb, oberhalb, vor oder hinter der mittigen Parkposition des Rückenlehnenoberteils positioniert ist.

Ist die Verlagerungskurve jedoch mehrfach gebogen, kann das Rückenlehnenoberteil entlang der Verlagerungskurve eine vielfältige Raumlagenveränderung erfahren, wodurch beispielsweise Hindernisse oder dergleichen umkurvt werden können.

Um beispielsweise auch auf dem Weg zwischen der mittigen Parkposition und der zusätzlichen Abstützlage des Rückenlehnenoberteils gegebenenfalls noch vorhandene Hindernisse umfahren zu können, ist es somit vorteilhaft, wenn die Führungsrolleneinrichtung eine mehrfach gebogene Verlagerungskurve aufweist.

Es versteht sich, dass das vorliegende Rückenlehnenoberteil in seiner Gesamtheit nur einen oberen Teilbereich der Rückenlehne an sich ausgestalten kann.

Es ist jedoch auch möglich, dass das Rückenlehnenoberteil lediglich ein Rückenlehnenpolsterelement ist, welches mittels der Führungsrolleneinrichtung entsprechend entlang einer Verlagerungskurve seitlich wenigstens über einen Seitenrand des Rückenlehnenunterteils linearverschieblich ist, wobei ein Gestell bzw. ein Grundgerüst der Rückenlehne insbesondere gegenüber dem Sitzteil ortsfest ist, sodass lediglich das Rückenlehnenpolsterelement von der mittigen Parkposition in die außermittige zusätzliche Abstützlage hinein verlagert wird.

Jedenfalls umfasst das Rückenlehnenoberteil in beiden Ausführungsformen Rückenlehnenpolsterelemente, mithilfe welcher die vorliegend bereits erläuterte Abstützfläche ausgestaltet werden kann.

Darüber hinaus ist es möglich, dass das Rückenlehnenoberteil in Richtung seiner Breitenstreckung kumulativ auch unterteilt sein kann, sodass das Rückenlehnenteil nicht zur Gänze entlang der Verlagerungskurve verschoben wird, sondern nur eine erste Rückenlehnenoberteilhälfte, wobei diese erste Rückenlehnenoberteilhälfte durch einen Vertikalspalt von einer zweiten Rückenlehnenoberteilhälfte des Rückenlehnenoberteils räumlich getrennt ist.

Jedenfalls sieht eine nicht minder vorteilhafte Ausführungsvariante vor, dass die sich über die Rückenlehne erstreckenden Rückenlehnenteile mit in Sitzrichtung vor den Rückenlehnenteilen befindlichen Rückenlehnenpolsterelementen ausgestattet sind, wobei ein erstes Rückenlehnenpolsterelement ein unteres gegenüber dem Sitzteil in seitlicher Richtung ortsfestes Rückenlehnenpolsterelement ist und ein weiteres Rückenlehnenpolsterelement oberhalb von dem ersten Rückenlehnenpolsterelement im Bereich des Rückenlehnenoberteils angeordnet ist, wobei das Rückenlehnenoberteil als eine außerhalb des Sitzteils und der Rückenlehne anordenbare zusätzliche Fahrzeugführerrumpfabstützeinrichtung ausgestaltet ist, welche zumindest teilweise in einem ansonsten fahrzeugsitzfreien Abstützbereich in Höhe des Bereichs des Rückenlehnenoberteils und außermittig seitlich der Rückenlehne temporär derart anordenbar ist, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außermittig seitlich der Rückenlehne abgestützt ist, wobei die zusätzliche Fahrzeugführerrumpfabstützeinrichtung mit einer Verlagerungseinrichtung von einer mittigen Parkposition in eine zusätzliche Abstützlage in dem ansonsten fahrzeugsitzfreien Abstützbereich verlagerbar angeordnet ist.

Im vorliegenden Fall handelt es sich bei der Verlagerungseinrichtung um die Führungsrolleneinrichtung, wie bereits vorstehend erwähnt.

Die Aufgabe der Erfindung wird darüber hinaus auch von einem Nutzkraftfahrzeug, insbesondere von einem landwirtschaftlichen Nutzkraftfahrzeug, mit wenigstens einem Fahrzeugsitz gelöst, bei welchem das Nutzkraftfahrzeug bzw. das landwirtschaftlich genutzte Nutzkraftfahrzeug mit einem Fahrzeugsitz nach einem der hier beschriebenen Merkmale bzw. nach einer der hier beschriebenen Merkmalskombinationen ausgerüstet ist.

Umfasst das Nutzkraftfahrzeug, insbesondere das landwirtschaftlich genutzte Nutzkraftfahrzeug, den erfindungsgemäßen Fahrzeugsitz, kann speziell für den Fahrzeugführer eine zusätzliche Rumpfabstützung im Arbeitsbetrieb insbesondere auf dem Acker oder auf sonstigen unbefestigten Wegen bereitgestellt werden, wodurch der Fahrzeugführer wesentlich besser geschützt ist, wie vorstehend bereits ausführlich erläutert und mehrfach beschrieben.

Weitere Vorteile, Ziele und Eigenschaften vorliegender Erfindung werden anhand anliegender Zeichnung und nachfolgender Beschreibung erläutert, in welchen ein Fahrzeugsitz beispielhaft mit unterschiedlich ausgestalteten Führungsrolleneinrichtungen dargestellt und beschrieben ist.

Komponenten bzw. Bereiche des Fahrzeugsitzes, welche in den einzelnen Figuren baugleich ausgestaltet sind, sind hierbei mit gleichen Bezugszeichen gekennzeichnet, wobei die Komponenten bzw. Bereiche nicht in allen Figuren beziffert und erläutert sein müssen. Insofern sind nur wesentlich geänderte Komponenten bzw. Bereiche, insbesondere hinsichtlich der beispielhaft gezeigten möglichen Führungsrolleneinrichtungen, mit neuen Bezugszeichen versehen.

Die Führungsrolleneinrichtung kann als Linearführungsrolleneinrichtung und die Verlagerungskurve als Linearverlagerungsachse ausgebildet sein.
- Figuren 1 a und 1 b: schematisch eine perspektivische Ansicht eines Nutzkraftfahrzeugsitzes in einem Normalbetriebszustand, in welchem das Rückenlehnenoberteil in einer Parkposition mittig oberhalb des Rückenlehenunterteils angeordnet ist;
- Figuren 2a und 2b: schematisch eine weitere Ansicht des Nutzkraftfahrzeugsitzes in einem Sonderabstützbetriebszustand, in welchem das Rückenlehnenoberteil außermittig seitlich des Rückenlehnenunterteils in einer Abstützlage hinein verschoben angeordnet ist;
- Figur 3: schematisch eine erste Detailansicht einer ersten möglichen Führungsrolleneinrichtung des Rückenlehnenoberteils in einer Ausgangsposition, bei welcher zwei übereinander und voneinander beabstandet angeordnete gekrümmte Führungselemente zumindest teilweise windschief zueinander verlaufend an Rollenelementehaltern gelagert sind;
- Figur 4: schematisch eine zweite Detailansicht der ersten möglichen Führungsrolleneinrichtung in einer seitlich weiter hinaus geschobenen Seitenposition, bei welcher die beiden Führungselemente auf Höhe der Rollenelementehalter bereits einen ersten Achsversatz aufweisen;
- Figur 5: schematisch eine weitere Detailansicht der ersten möglichen Führungsrolleneinrichtung in einer seitlich noch weiter hinaus geschobenen Seitenposition, bei welcher die beiden Führungselemente auf Höhe der Rollenelementehalter einen größeren Achsversatz aufweisen;
- Figur 6: schematisch eine letzte Detailansicht der ersten möglichen Führungsrolleneinrichtung in einer Endposition, bei welcher die beiden Führungselemente auf Höhe der Rollenelementehalter einen maximalen Achsversatz aufweisen;
- Figur 7: schematisch eine Detailansicht einer zweiten möglichen Führungsrolleneinrichtung des Rückenlehnenoberteils in einer Ausgangsposition, bei welcher zwei übereinander und voneinander beabstandet angeordnete und zumindest teilweise windschief zueinander verlaufende Führungselemente mehrfach gekrümmt sind;
- Figur 8: schematisch eine weitere Detailansicht der Führungsrolleneinrichtung aus der Figur 7 in einer Endposition, in welcher sich das Rückenlehnenoberteil in einer Abstützlage befindet.
- Figur 9: schematisch eine Vorderansicht einer dritten möglichen Führungsrolleneinrichtung mit einem vier Rollenelementepaare halternden Rollenapparat;
- Figur 10: schematisch eine Aufsicht insbesondere des Rollenapparats aus der Figur 9;
- Figur 11: schematisch eine geschnittene Seitenansicht insbesondere des Rollenapparats aus Figur 9 entlang der Schnittlinie A-A bzgl. Figur 9;
- Figur 12: schematisch eine Vorderansicht einer vierten möglichen Führungsrolleneinrichtung mit einem zwei Rollenelementepaare und ein Einzelrollenelement halternden Rollenapparat;
- Figur 13: schematisch eine Aufsicht insbesondere des Rollenapparats aus der Figur 12;
- Figur 14: schematisch eine geschnittene Seitenansicht insbesondere des Rollenapparats aus den Figuren 12 und 13 entlang der Schnittlinie A-A bzgl. Figur 12;
- Figur 15: schematisch eine Vorderansicht einer fünften möglichen Führungsrolleneinrichtung mit einem Rollenapparat umfassend eine Rollenelementeanordnung aus zwei ortsfesten Rollenelemente und einem hierzu verlagerbaren Rollenelement, sowie einem anders ausgerichteten Einzelrollenelement;
- Figur 16: schematisch eine Aufsicht insbesondere des Rollenapparats aus der Figur 15;
- Figur 17: schematisch eine geschnittene Seitenansicht insbesondere des Rollenapparats aus den Figuren 15 und 16 entlang der Schnittlinie A-A bzgl. Figur 15;
- Figur 18: schematisch eine perspektivische Ansicht einer sechsten möglichen Führungsrolleneinrichtung mit durch Rollen- und Gleitelemente geführten Führungselementen;
- Figur 19: schematisch eine Aufsicht der sechsten möglichen Führungsrolleneinrichtung aus der Figur 18;
- Figur 20: schematisch eine Ansicht einer Rollenelementeanordnung mit drei Rollenelementen an einer Lagerstelle zum Lagern eines Führungselements;
- Figur 21: schematisch eine Ansicht einer anderen Rollenelementeanordnung mit vier Zylinderrollenelementen an einer Lagerstelle zum Lagern eines Führungselements;
- Figur 22: schematisch eine Ansicht einer weiteren Rollenelementeanordnung mit drei Zylinderrollenelementen an einer Lagerstelle zum Lagern eines Führungselements;
- Figur 23: schematisch eine Ansicht einer weiteren Rollenelementeanordnung mit vier Zylinderrollenelementen an einer Lagerstelle zum Lagern eines Führungselement aus einem Stangenmaterial;
- Figur 24: schematisch eine Ansicht einer alternativen Rollenelementeanordnung mit vier Zylinderrollenelementen an einer Lagerstelle zum Lagern eines u-förmigen ersten Führungselementprofils; und
- Figur 25: schematisch eine Ansicht einer weiteren Rollenelementeanordnung mit vier Zylinderrollenelementen an einer Lagerstelle zum Lagern eines weiteren u-förmigen Führungselementprofils.

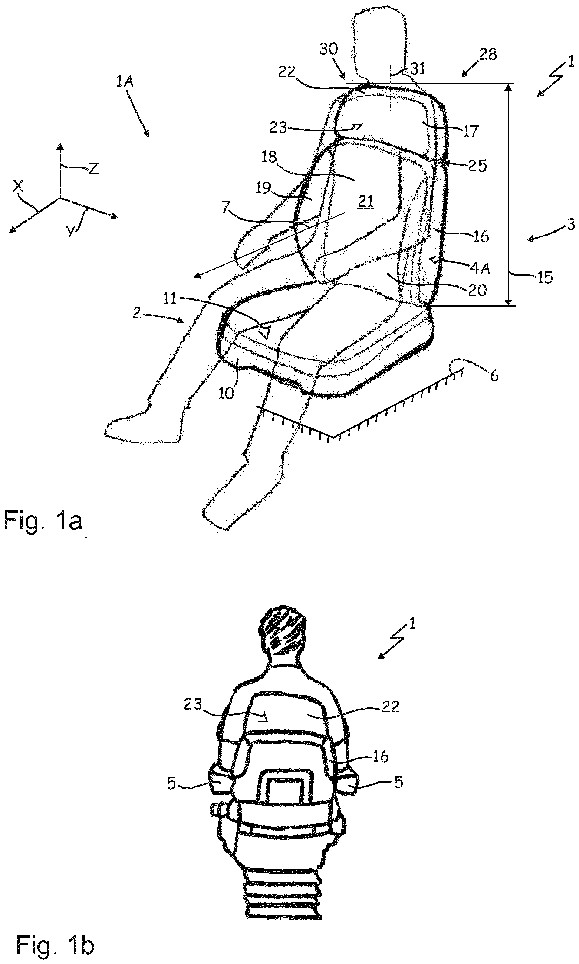

Bei dem in den Figuren 1 bis 8 gezeigten Fahrzeugsitz 1 handelt es sich um einen Nutzkraftfahrzeugsitz 1A, welcher ein Sitzteil 2 und eine Rückenlehne 3 aufweist, wobei an dem rechten Seitenrand 4A an der Rückenlehne 3 noch eine Armlehne 5 vorgesehen ist.

Der Nutzkraftfahrzeugsitz 1 A ist mit seinem Sitzteil 2 mittels eines hier nicht gezeigten Fahrzeugsitzunterteils an einer Karosserie (hier nicht gezeigt) eines Nutzkraftfahrzeugs 6 befestigt.

Das Nutzkraftfahrzeug 6 definiert eine Fahrzeuglängserstreckung X, eine Fahrzeugbreitenerstreckung Y und eine Fahrzeughöhenerstreckung Z, welche auch hinsichtlich der Orientierung des Nutzkraftfahrzeugsitzes 1 A verwendet werden können.

Insofern kann mithilfe der Fahrzeuglängserstreckung X eine Position bzw. Lageveränderung "vor" bzw. "hinter" bezüglich der Rückenlehne 3 definiert werden.

Mithilfe der Fahrzeugbreitenerstreckung Y kann eine Position bzw. Lageveränderung "seitlich" bzw. "neben" bezüglich der Rückenlehne 3 definiert werden.

Und mithilfe der Fahrzeughöhenerstreckung Z kann dementsprechend eine Position bzw. Lageveränderung "oben" bzw. "unten" bezüglich der Rückenlehne 3 definiert werden.

Hierbei ist der Nutzkraftfahrzeugsitz 1 A derart in dem Nutzkraftfahrzeug 6 angeordnet, dass die Hauptsitzrichtung 7 des Nutzkraftfahrzeugsitzes 1 A im Wesentlichen mit der Fahrzeuglängserstreckung X fluchtet.

Das Sitzteil 2 umfasst ein Sitzteilpolsterelement 10, welches die eigentliche Sitzteilfläche 11 des Sitzteils 2 ausgestaltet.

Hinsichtlich der Rückenlehne 3 verhält es sich ähnlich, wobei die Rückenlehne 3 über ihre Gesamthöhe 15 in ein Rückenlehnenunterteil 16 und ein Rückenlehnenoberteil 17 unterteilt ist. Die Gesamthöhe 15 erstreckt sich im Wesentlichen in Richtung der Fahrzeughöhenerstreckung Z.

Hierbei umfasst das Rückenlehnenunterteil 16 ein Unterteilpolsterelement 18 mit äußeren Wangenbereichen 19 und 20, sodass das Rückenlehnenunterteil 16 insgesamt eine stark konturierte Unterteilfläche 21 ausgestaltet.

Dementsprechend umfasst das Rückenlehnenoberteil 17 ein Oberteilpolsterelement 22, welches jedoch eine glatte Oberteilfläche 23 ausgestaltet.

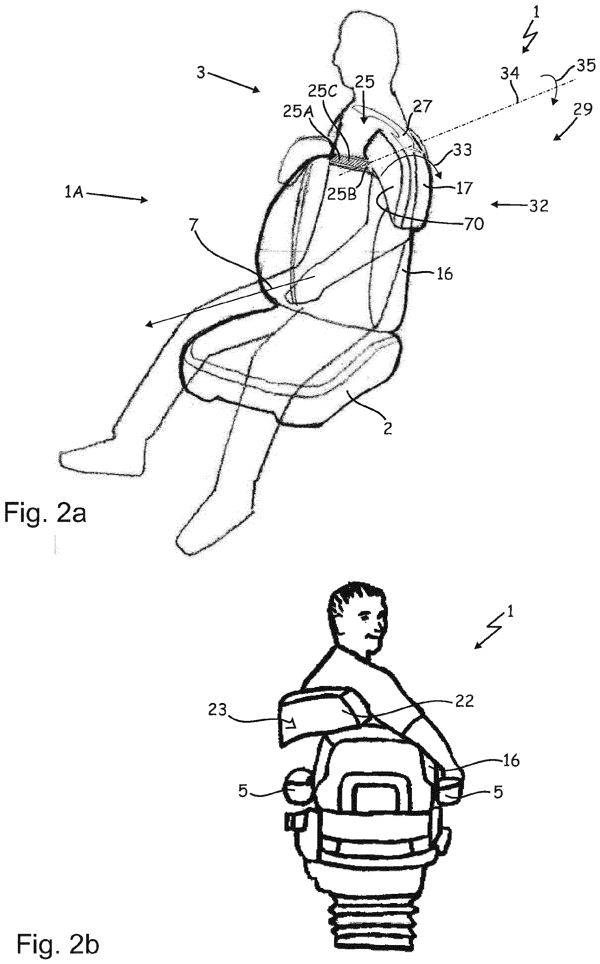

Darüber hinaus umfasst der Nutzkraftfahrzeugsitz 1A eine Haltevorrichtung 25 (siehe insbesondere ab Figur 2), mittels welcher das Rückenlehnenoberteil 17 gegenüber dem Rückenlehnenunterteil 16 verlagerbar an der Rückenlehne 3 gehaltert ist.

Die Haltevorrichtung 25 ist hierbei mittels nur schematisch angedeuteter Haltebügelelemente 25A und 25B, welche mit einem Halteplattenelement 25C untereinander starr verbunden sind, in entsprechend in dem Rückenlehnenunterteil 16 eingelassenen Haltebuchsen (hier nicht gezeigt) lösbar festgelegt.

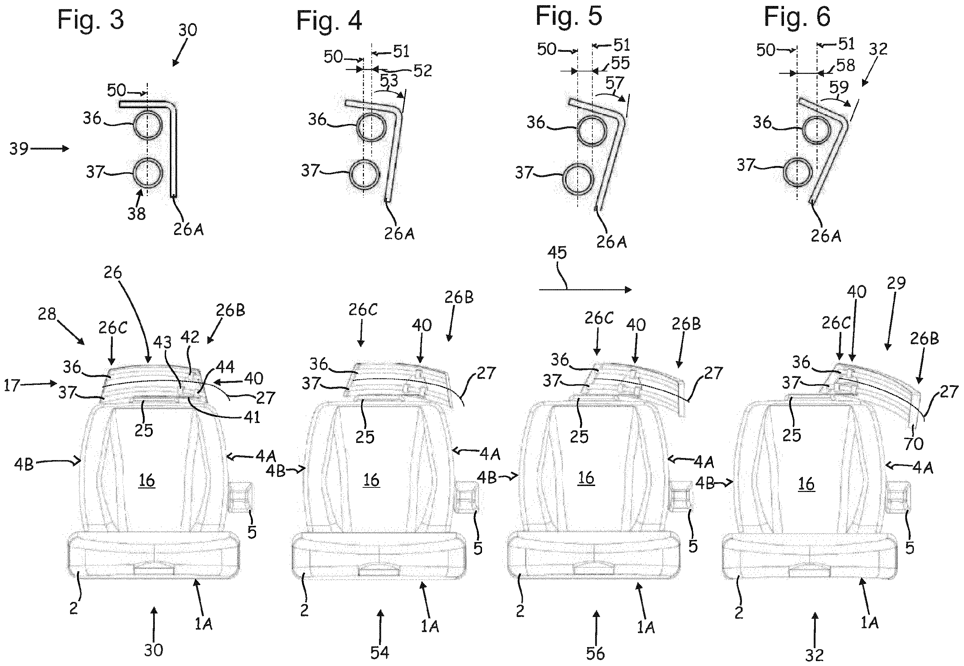

Diese derart ausgestaltete Haltevorrichtung 25 weist die erfindungsgemäße Führungsrolleneinrichtung 26 (siehe ab Figur 3) auf, die derart ausgestaltet ist, dass das Rückenlehnenoberteil 17 entlang einer fiktiven Verlagerungskurve 27 seitlich über wenigstens einen Seitenrand 4 des Rückenlehnenunterteils 16 bzw. der Rückenlehne 3 linearverschieblich verlagerbar ist, während das Rückenlehnenunterteil 16 gegenüber dem Sitzteil 2 ortsfest ist.

Insofern stellt das Rückenlehnenoberteil 17 den gegenüber dem Sitzteil 2 seitlich verschieblichen Teil der Rückenlehne 3 dar, während das Rückenlehnenunterteil 16 den gegenüber dem Sitzteil 2 ortsfesten Teil der Rückenlehne 3 darstellt.

Hierdurch kann das Rückenlehnenoberteil 17 aus einer mittigen Parkposition 28 (siehe Figuren 1a, 1b, 3 und auch 7) heraus entlang der Verlagerungskurve 27 in eine außermittige Abstützlage 29 (siehe Figuren 2a, 2b, 6 und auch 8) hinein verlagert bzw. geschoben werden.

Da die Gesamthöhe 15 in Richtung der Fahrzeughöhenerstreckung Z verläuft, ist klar, dass das Rückenlehnenoberteil 17 zumindest in der mittigen Parkposition 28 vollständig über dem Rückenlehnenunterteil 16, das heißt oberhalb des Rückenlehnenunterteils 16, positioniert ist, sodass der Fahrzeugführer in diesem Normalbetriebszustand in Hauptsitzrichtung 7 bequem auf dem Nutzkraftfahrzeugsitz 1A Platz nehmen kann.

Die fiktive Verlagerungskurve 27 verläuft hierbei quer zur Hauptsitzrichtung 7 bzw. zur Fahrzeuglängserstreckung X. Insofern erstreckt sich die fiktive Verlagerungskurve 27 im Wesentlichen in Fahrzeugbreitenerstreckung Y.

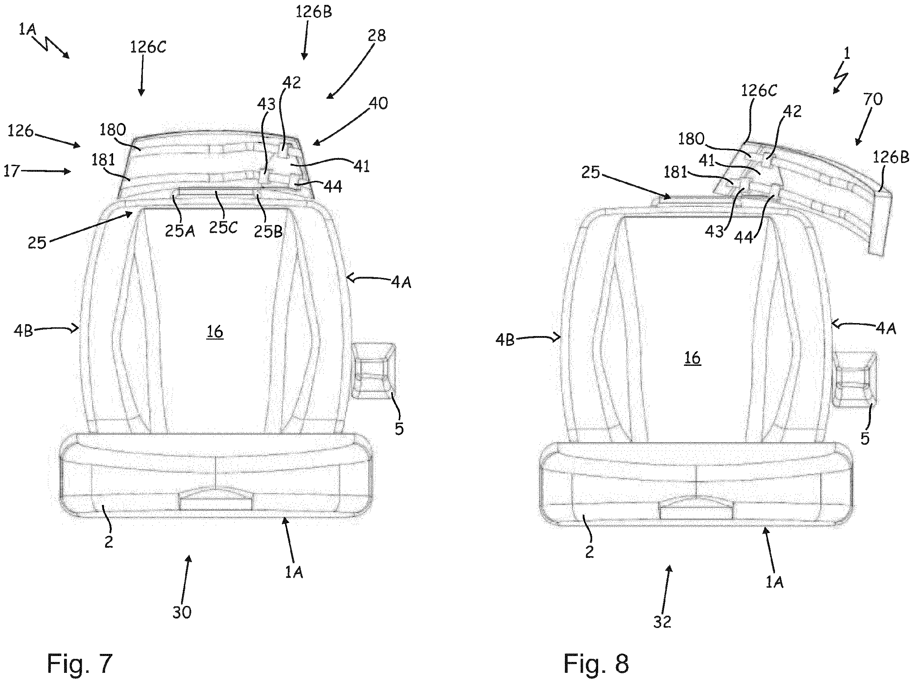

In der mittigen Parkposition 28 des Rückenlehnenoberteils 17 befindet sich die Führungsrolleneinrichtung 26 bzw. entsprechende Bauteile hiervon in einer Ausgangslage 30 (siehe auch Figuren 3 bzw. 7).

Diese mittige Parkposition 28 bzw. diese Ausgangslage 30 definieren sich dadurch, dass einerseits das Rückenlehnenoberteil 17 bzw. andererseits die Führungsrolleneinrichtung 26 sich mittig in Bezug auf eine vertikale Mittelachse 31 der Rückenlehne 3 befinden. Die vertikale Mittelachse 31 erstreckt sich im Wesentlichen in Richtung der Fahrzeughöhenerstreckung Z. Insofern befindet sich die mittige Parkposition 28 mittig zwischen den beiden Seitenrändern 4A und 4B.

Hinsichtlich der außermittigen Abstützlage 29 des Rückenlehnenoberteils 17 befindet sich die Führungsrolleneinrichtung 26 in einer seitlichen außermittigen Endlage 32 (siehe insbesondere Figuren 2a, 2b und 6), wobei sich diese seitliche außermittige Endlage 32 rechts neben der vertikalen Mittelachse 31 und damit auch zumindest teilweise rechts neben der rechten Seitenwand 4A des Rückenlehnenunterteils 16 befindet.

Es versteht sich, dass bei entsprechend ausgestalteter Führungsrolleneinrichtung 26 die seitliche außermittige Endlage 32 auch links neben der vertikalen Mittelachse 31 und damit auch zumindest teilweise links neben der linken Seitenwand 4B des Rückenlehnenunterteils 16 angeordnet sein kann.

Die Führungsrolleneinrichtung 26 ist in diesem Ausführungsbeispiel vollständig innerhalb des Rückenlehnenoberteils 17 untergebracht bzw. von dem Rückenlehnenoberteil 17 zumindest teilweise verdeckt, sodass sie nach den Darstellungen gemäß der Figuren 1a, 1b und 2a, 2b auch nicht explizit dargestellt ist.

Das Rückenlehnenoberteil 17 ist mittels der erfindungsgemäßen Führungsrolleneinrichtung 26 nicht nur linearverschieblich über den rechten Seitenrand 4A des Rückenlehnenunterteils 16 linearverschieblich verlagerbar, sondern darüber hinaus auch noch nach hinten bezüglich der Rückenlehne 3 bzw. nach unten bezüglich der Rückenlehne 3 neigbar, wenn das Rückenlehnenoberteil 17 entlang der fiktiven Verlagerungskurve 27 verschoben wird.

Insofern ist das Rückenlehnenoberteil 17 in diesem Ausführungsbeispiel beim seitlichen Verlagern zusätzlich um die fiktive Verlagerungskurve 27 in eine erste Neigungsrichtung 33 drehbar und/oder um eine quer zu der Verlagerungskurve 27 verlaufende Querachse 34 in eine zweite Neigungsrichtung 35 drehbar.

Um eine solche mehrfach geneigte Lageänderung des Rückenlehnenoberteils 17 konstruktiv einfach derart zu bewerkstelligen, dass die Führungsrolleneinrichtung 26 kompakt und idealerweise vollständig in das Rückenlehnenoberteil 17 integriert werden kann, ist die Führungsrolleneinrichtung 26 zumindest teilweise helixförmig ausgestaltet.

In diesem konkreten ersten Ausführungsbeispiel ist der Effekt einer helixförmig ausgestalteten Führungsrolleneinrichtung 26 baulich einfach dadurch erzielt, dass die Führungsrolleneinrichtung 26 zwei nebeneinander und voneinander beabstandet angeordnete Führungselemente 36 und 37 in Gestalt von Rohrelementen 38 (hier nur exemplarisch beziffert) aufweist, wobei die beiden Führungselemente 36 und 37 zumindest teilweise zueinander windschief angeordnet sind, wenn sie nicht bereichsweise parallel zueinander verlaufen.

Das heißt, dass eines der Führungselemente 36 bzw. 37 im Verlauf der fiktiven Verlagerungskurve 27 gegenüber dem anderen der Führungselemente 36 bzw. 37 verschieden innerhalb eines Gehäuseelements 26A der Führungsrolleneinrichtung 26 (siehe insbesondere ab Fig. 3) angeordnet ist.

Die beiden Führungselemente 36 und 37 sind in diesem Ausführungsbeispiel an einem ersten Ende 26B der Führungsrolleneinrichtung 26 somit parallel verlaufend zueinander angeordnet, während sie in Richtung eines zweiten Endes 26C windschief verlaufend zueinander angeordnet sind, wie besonders gut in den einzelnen Schnittdarstellungen 39 der jeweiligen oberen Teildarstellungen der Figuren 3 bis 6 zu sehen ist.

Die beiden Führungselemente 36 und 37 definieren hierbei die fiktive Verlagerungskurve 27, welche sich vorliegend fiktiv zwischen den beiden Führungselementen 36 und 37 erstreckt.

Hierbei sind die Führungselemente 36 und 37 derart gekrümmt ausgeführt, dass die fiktive Verlagerungskurve 27 einmal gekrümmt ist, wodurch das Rückenlehnenoberteil 17 einer Bahnkurve folgt, wenn es entlang der einmal gebogenen fiktiven Verlagerungskurve 27 verschoben wird.

Neben den beiden Führungselementen 36 und 37 umfasst die Führungsrolleneinrichtung 26 noch eine Halteeinrichtung 40, welche an der Haltevorrichtung 25 des Nutzkraftfahrzeugsitzes 1 A befestigt ist.

Genauer gesagt, ist diese Halteeinrichtung 40 an dem Halteplattenelement 25C ortsfest angebracht.

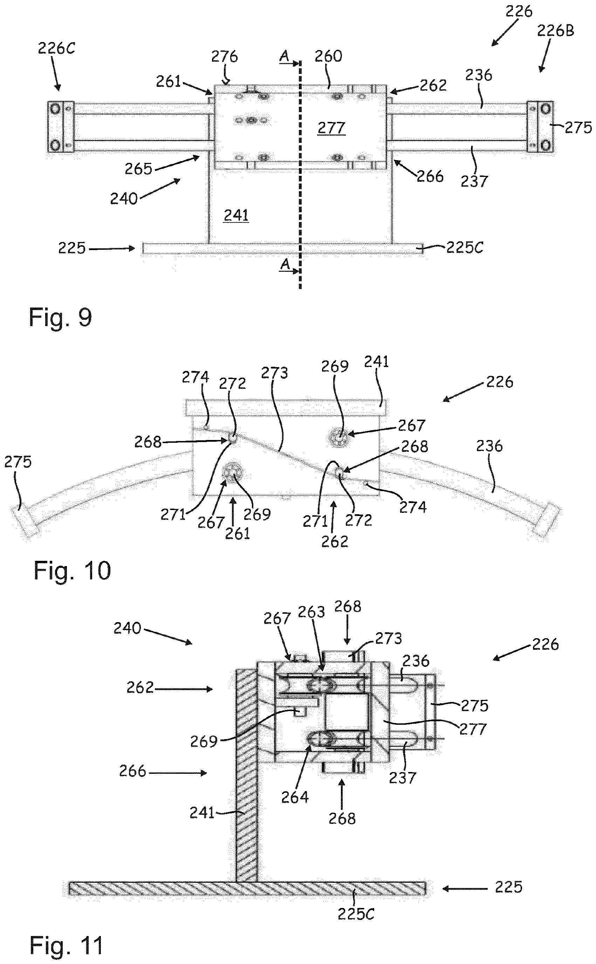

Diese Halteeinrichtung 40 besteht in diesem Ausführungsbeispiel aus einem deltaförmig ausgestalteten Halteblechelement 41, an welchen wiederum drei Rollenelementehalter 42, 43 und 44 zum Haltern von Rollenelementen (siehe beispielsweise Figuren 9 und 10) befestigt sind.

Das deltaförmig ausgestaltete Halteblechelement 41 ist hierbei mit dem Halteplattenelement 25C stoffschlüssig verbunden, vorzugsweise verschweißt. Eine gleichwertige Verbindung kann alternativ auch mittels einer Schraub-, oder Nietverbindung oder dergleichen begründet sein.

In diesem Ausführungsbeispiel ist die Halteeinrichtung 40 also starr mit der Haltevorrichtung 25 verbunden. Ebenso sind die drei Rollenelementehalter 42, 43 und 44 an dem Halteblechelement 41 der Halteeinrichtung 40 ortsfest festgelegt. Hierdurch ergibt sich insgesamt eine robuste und dauerfeste Befestigung des Rückenlehnenoberteils 17 gegenüber dem Rückenlehnenunterteil 16.

Durch das deltaförmig ausgestaltete Halteblechelement 41 kann die Halteeinrichtung 40 insgesamt kompakter gebaut werden und es ist darüber hinaus möglich, dass das erste Führungselement 36 lediglich an dem ersten Rollenelementehalter 42 und das zweite Führungselement 37 sowohl an dem zweiten Rollenelementehalter 43 als auch an dem dritten Rollenelementehalter 44 entlang der fiktiven Verlagerungskurve 27 erfindungsgemäß in Verschieberichtung 45 rollend verschoben werden können.

Vorteilhafterweise sind diese Rollenelementehalter 42, 43 und 44 derart ausgestaltet, dass sie mithilfe des Halteblechelements 41 der Halteeinrichtung 40 und der Haltevorrichtung 25 an dem Rückenlehnenunterteil 16 angeordnet sind und an welchen gleichzeitig die als Rohrelemente 38 ausgestalteten Führungselemente 36 und 37 quer zur Hauptsitzrichtung 7 in Richtung der fiktiven Verlagerungskurve 27 geführt sind.

Nach der Darstellung gemäß der Figur 3 befindet sich die Führungsrolleneinrichtung 26 noch in der Ausgangslage 30 (vgl. Figuren 1a, 1b), bei welcher sich das Rückenlehnenoberteil 17 in der mittigen Parkposition 28 befindet. Wie insbesondere nach der oberen Schnittdarstellung 39 der Figur 3 auf Höhe der Halteeinrichtung 40 gut zu erkennen ist, sind die beiden Führungselemente 36 und 37 im Bereich des ersten Endes 26B der Führungsrolleneinrichtung 26 gemeinsam zentrisch in einer Vertikalebene 50 parallel zueinander angeordnet. Insofern ist das Rückenlehnenoberteil 17 noch nicht im Sinne der Erfindung nach hinten bzw. nach unten geneigt angeordnet.

Im weiteren Verlauf der beiden Führungselemente 36 und 37 auf das zweite Ende 26C der Führungsrolleneinrichtung 26 zu, liegt das erste Führungselement 36 jedoch schon nicht mehr mit dem zweiten Führungselement 37 zentrisch in der gemeinsamen Vertikalebene 50, sondern es ist zentrisch in einer Vertikalparallelebene 51 angeordnet, sodass zwischen den beiden Führungselementen 36 und 37 ein erster Achsversatz 52 besteht, wie aus der oberen Schnittdarstellung 39 der Figur 4 auf Höhe der Halteeinrichtung 40 gut zu erkennen ist.

Da die beiden Führungselemente 36 und 37 fest in dem Gehäuseelement 26A verbaut sind, hat dies den Effekt, dass das Rückenlehnenoberteil 17 gemäß einem ersten Neigungswinkel 53 in die erste Neigungsrichtung 33 (siehe Figuren 2a, 2b) nach hinten geneigt wird, wenn das Rückenlehnenoberteil 17 in Verschieberichtung 45 seitlich entlang der fiktiven Verlagerungskurve 27 bewegt wird (vgl. Figur 4). Gleichzeitig neigt sich das Rückenlehnenoberteil 17 in dieser ersten dargestellten Zwischenlage 54 aufgrund der etwas schräg angeordneten Halteeinrichtung 40 und der Krümmung der Führungselemente 36 und 37 nach unten in die zweite Neigungsrichtung 35 um die Querachse 34 (siehe auch Figuren 2a, 2b).

Dieser Effekt verstärkt sich umso mehr das Rückenlehnenoberteil 17 in Richtung seiner außermittigen Abstützlage 29 bzw. die Führungsrolleneinrichtung 26 in Ihre Endlage 32 (siehe Figur 6) bewegt wird, da der Achsversatz zwischen den beiden Führungselementen 36 und 37 im Verlauf auf das zweite Ende 26C zu stetig zunimmt, wie beispielsweise nach der Darstellung gemäß der Figur 5 mit einem größeren Achsversatz 55 gut verdeutlicht ist.

Dementsprechend vergrößert sich in dieser zweiten Zwischenlage 56 auch der erste Neigungswinkel 53 zu einem größeren Neigungswinkel 57 (siehe Schnittdarstellung 39, Figur 5) und weiter bis die beiden Führungselemente 36 und 37 an ihr zweites Ende 26C in Verschieberichtung 45 durch die entsprechenden Rollenelementehalter 42, 43 und 44 hindurch geschoben sind und sich die Führungsrolleneinrichtung 26 letztendlich in ihrer Endlage 32 bzw. das Rückenlehnenoberteil 17 in ihrer außermittigen Abstützlage 29 befinden.

In dieser Endlage 32 können nun ein maximaler Achsversatz 58 und dementsprechend ein maximaler Neigungswinkel 59 ausgenutzt werden, um das Rückenlehnenoberteil 17 als maximal heraus geschobene und entsprechend positionierte Fahrzeugführerrumpfabstützeinrichtung 70 vollständig als zusätzliche Abstützfläche nutzen zu können.

Insofern kann das Rückenlehnenoberteil 17, sobald es insbesondere vollständig in seine außermittigen Abstützlage 29 (vgl. Figuren 2a, 2b und 6) hinein verlagert wurde, auch vollständig als zusätzliche Fahrzeugführerrumpfabstützeinrichtung 70 fungieren, wodurch der Sitzkomfort des Fahrzeugführers entsprechend erhöht ist.

Während hinsichtlich des ersten Ausführungsbeispiels die beiden Führungselemente 36 und 37 hinsichtlich der ersten in den Figuren 3 bis 6 detailliert gezeigten Führungsrolleneinrichtung 26 als Rohrelemente 28 noch eine einfache Krümmung aufweisen, sind in diesem weiteren Ausführungsbeispiel entsprechende Rundstangenelemente 180 und 181 einer in den Figuren 7 und 8 gezeigten alternativen Führungsrolleneinrichtung 126 mehrfach gekrümmt, sodass das Rückenlehnenoberteil 17 einer mehrfach gekrümmten fiktiven Verlagerungskurve (hier nicht explizit eingezeichnet) folgen kann. Hierdurch ist es möglich, dass das Rückenlehnenoberteil 17 beim Verlagern zwischen der mittigen Parkposition 28 (siehe Figur 7) und der außermittigen Abstützlage 29 (siehe Figur 8) vorteilhafterweise gegebenenfalls noch Hindernisse (hier nicht gezeigt) umfahren kann.

Ansonsten entspricht der in den Figuren 7 und 8 gezeigte Nutzkraftfahrzeugsitz 1A den zuvor in den Figuren 1 bis 6 bereits beschriebenen Aufbau, sodass auf die diesbezügliche Beschreibung verwiesen wird, um Wiederholungen zu vermeiden.

Hinsichtlich des in den Figuren 9 bis 11 gezeigten dritten Ausführungsbeispiels umfasst eine dritte mögliche Führungsrolleneinrichtung einen Rollenapparat 260, an welchem zwei Rollenelementepaare 261 und 262 zum Definieren einer ersten Führungsbahn 263 für ein erstes Führungselement 236 sowie ein drittes Rollenelementepaar 265 und ein viertes Rollenelementepaar 266 zum Definieren einer zweiten Führungsbahn 264 für ein zweites Führungselement 237 gehaltert sind.

Der Rollenhalteapparat 260 ist Bestandteil einer Halteeinrichtung 240, wobei der Rollenhalteapparat 260 mittels eines Halteblechelements 241 an einem Halteplattenelement 225C einer hier nicht näher gezeigten Haltevorrichtung 225 des Nutzkraftfahrzeugs 1A (siehe insbesondere Figuren 1a, 1b und 2a, 2b) befestigt ist.

Jedes der Rollenelementepaare 261, 262, 265 und 266 besteht bei diesem dritten Ausführungsbeispiel immer aus einem Festlager-Rollenelement 267 und einem Loslager-Rollenelement 268, wobei das Festlager-Rollenelement 267 ortsfest, aber drehbar in dem Rollenhalteapparat 260 und das Loslager-Rollenelement 268 dementsprechend gegenüber diesem ortsfesten Rollenelement 267 verlagerbar in dem Rollenhalteapparat 260 gehaltert ist.

Dementsprechend kann hinsichtlich des Festlager-Rollenelements 267 synonym auch von einem ortsfesten Rollenelement 267 und hinsichtlich des Loslager-Rollenelements 268 synonym auch von einem verlagerbaren Rollenelement 268 gesprochen werden.

Während die Festlager-Rollenelemente 267 somit eine im Rollenhalteapparat 260 ortsfeste Drehachse 269 aufweisen, besitzen die Loslager-Rollenelemente 268 jeweils eine in einem Langloch 271 platzierte verlagerbare Drehachse 272.

Die jeweiligen Langlöcher 271 sind in den Rollenhalteapparat 260 derart eingearbeitet, dass die Loslager-Rollenelemente 268 gegenüber dem jeweils zugeordneten Festlager-Rollenelement 267 derart bewegt werden können, dass das jeweilige Führungselement 236 bzw. 237 immer an den Rollenelementepaaren 261, 262 bzw. 265 und 266 spielfrei geführt werden kann.

Hierzu sind die Loslager-Rollenelemente 268 entsprechend federvorgespannt und zwar mittels eines einzigen Blattfederelements 273 gelagert, wobei das einzige Blattfederelement 273 gegenüber zwei Spannstegen 274 und den verlagerbaren Drehachsenelemente 272 verspannt angeordnet ist.

Das erste Führungselement 236 und das zweite Führungselement 237 sind am ersten Ende 226B und an dem zweiten Ende 226C der dritten möglichen Führungsrolleneinrichtung 226 jeweils mittels eines Flanschelements 275 (nur exemplarisch beziffert) starr miteinander verbunden, wobei an diesen Flanschelementen 275 das Rückenlehnenoberteil 17 (siehe insbesondere Figuren 1a, 1b und 2a, 2b) angeschraubt und somit fest mit den beiden Führungselementen 236 und 237 verbunden ist.

Der Rollenhalteapparat 260 zeichnet sich darüber hinaus noch durch ein robustes Gehäuse 276 aus, welches aus einzelnen massiven Plattenelementen 277 (hier nur exemplarisch beziffert) zusammengeschraubt ist.

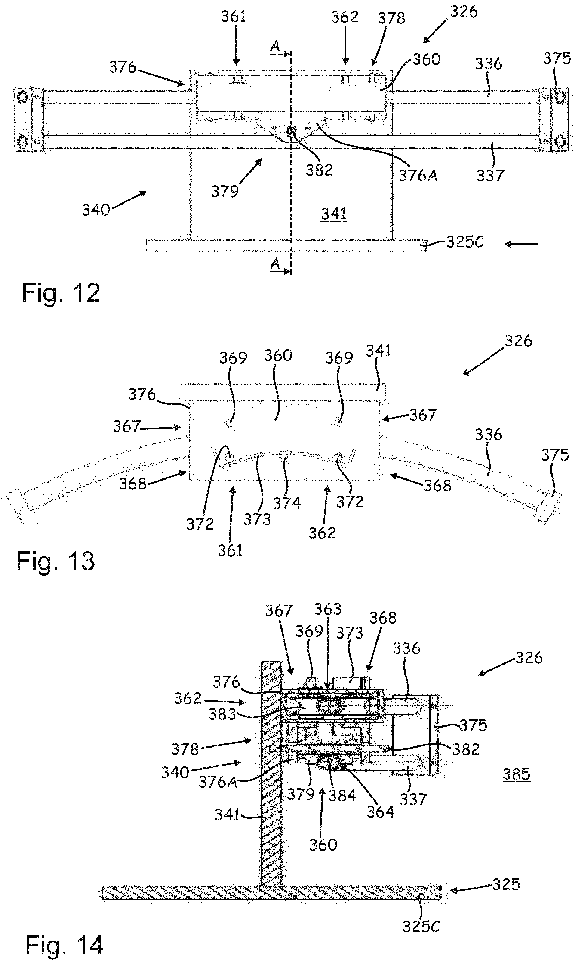

Das in der Figur 12 gezeigte vierte Ausführungsbeispiel einer vierten möglichen Führungsrolleneinrichtung 326 weist einen alternativen Rollenhalteapparat 360 auf, der wiederum an einem Halteblechelement 341 einer Halteeinrichtung 340 angeflanscht ist, wobei dieses Halteblechelement 341 an einem Halteplattenelement 325C einer hier nicht weiter dargestellten Haltevorrichtung 325 angeordnet ist.
Die vierte mögliche Führungsrolleneinrichtung 326 umfasst darüber hinaus wieder ein erstes Führungselement 336 und ein zweites Führungselement 337, die an ihren jeweiligen Enden mittels Flanschelemente 375 fest miteinander verbunden sind.

Diese Führungselemente 336 und 337 sind mittels einer Rollenelementeanordnung 378 an dem Rollenhalteapparat 260 linear rollend geführt.

Die Rollenelementeanordnung 378 besteht in diesem vierten Ausführungsbeispiel aus zwei Rollenelementepaaren 361 und 362, mittels welchen das erste Führungselement 336 an der Führungsrolleneinrichtung 326 geführt wird.

Das zweite Führungselement 337 hingegen ist lediglich mittels eines Einzelrollenelements 379 an dem Rollenhalteapparat 360 geführt.

Die beiden Rollenelementepaare 361 und 362 setzen sich jeweils aus einem Festlager-Rollenelement 367 und einem Loslager-Rollenelement 368 zusammen, wobei das diesbezügliche ortsfeste Rollenelement mit einem festgelegten Drehachsenelement 369 in dem Gehäuse 367 des Rollenhalteapparats 360 drehbar festgelegt ist. Die beiden korrespondierenden verlagerbaren Rollenelemente jedoch sind jeweils entlang eines Langlochs 371 mithilfe verlagerbarer Drehachsenelemente 372 in dem Gehäuse 376 verlagerbar gelagert.

Eine Federvorspannung der beiden Loslager- Rollenelemente 268 der Rollenelementepaare 361 und 362 erfolgt auch in diesem vierten Ausführungsbeispiel wieder über ein einziges Blattfederelement 373, welches zwischen einem Spannstegelement 374 und den beiden verlagerbaren Drehachsenelementen 372 verspannt angeordnet ist.

Hierbei befindet sich das Spannstegelement 374 räumlich zwischen den beiden verlagerbaren Drehachsenelementen 372 derart angeordnet, dass das einzige Blattfederelement 373 über diese drei Punkte entsprechend vorgespannt werden kann.

Das Einzelrollenelement 379 ist mittels eines weiteren ortsfesten, aber drehbaren Drehachsenelements 382 in einem Gehäuseunterteil 376A des Gehäuses 376 festgelegt.

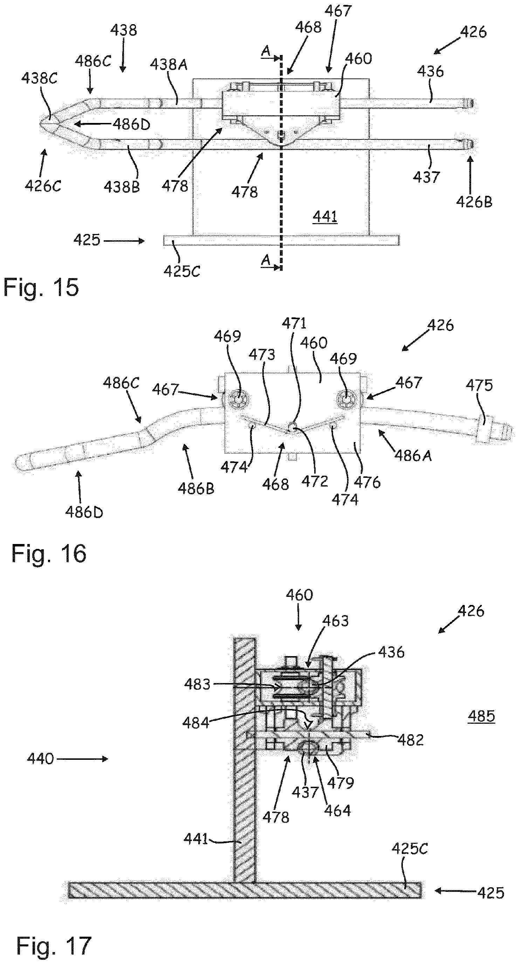

Hierbei ist das weitere ortsfeste Drehachsenelement 382 rechtwinklig zu den ortsfesten Drehachsenelementen 369, aber auch zu den verlagerbaren Drehachsenelementen 372 angeordnet, wodurch die erste Führungsbahn 363 ausgestaltende Führungsflächen 383 und eine die zweite Führungsbahn 364 ausgestaltende weitere Führungsfläche 384 zueinander unterschiedlich im Raum 385 orientiert angeordnet bzw. ausgerichtet sind.
Das in den Figuren 15 bis 17 gezeigte fünfte Ausführungsbeispiel illustriert eine fünfte mögliche Führungsrolleneinrichtung 426 mit einem anders gestalteten Rollenhalteapparat 460, wobei dieser Rollenhalteapparat 460 eine alternative Rollenelementeanordnung 478 haltert, die einerseits aus zwei Festlager-Rollenelementen 467 und einem Loslager-Rollenelement 468 sowie andererseits aus einem Einzelrollenelement 479 besteht.

Der Rollenhalteapparat 460 ist an einem Halteblechelement 441 einer Halteeinrichtung 440 der Linearrollenführungseinrichtung 426 angeflanscht. Diese Halteeinrichtung 440 ist wiederum an einem Halteplattenelement 425C einer Haltevorrichtung 425 angeordnet, wobei diese Haltevorrichtung 425 an dem Rückenlehnenunterteil 16 der Rückenlehne 3 (siehe Figuren 1a, 1b und 2a, 2b) direkt befestigt werden kann, wie vorstehend hinsichtlich der anderen Ausführungsbeispiele bereits mehrfach erläutert.

Die beiden Festlager-Rollenelemente 467 und das Loslager-Rollenelement 468 formulieren hierbei eine erste Führungsbahn 463 für ein erstes Führungselement 436. Dahingehend wird eine zweite Führungsbahn 464 für ein zweites Führungselement 437 lediglich durch das Einzelrollenelement 478 formuliert, wodurch die Führungsrolleneinrichtung insgesamt schlanker baut.

Die beiden Führungselemente 436 und 437 sind in diesem fünften Ausführungsbeispiel als ein u-förmiges Rohrelement 438 ausgebildet, dessen beide Rohrelementeschenkel 438A und 438B im Bereich des zweiten Endes 426C der Linearrollenführungseinrichtung 426 in einer u-förmig ausgeprägten Spitze 438C unlösbar miteinander verbunden sind.

Am ersten Ende 426B der Linearrollenführungseinrichtung 426 werden die beiden Rohrelementeschenkel 438A und 438B des u-förmigen Rohrelements 438 wieder mit einem hier jedoch nicht gezeigten Flanschelement (siehe beispielsweise Figuren 9 und 12) miteinander fest, aber lösbar untereinander verbunden.

Das u-förmige Rohrelement 438 ist in diesem Ausführungsbeispiel zudem mehrfach gebogen und weist dementsprechend jeweils einen ersten Krümmungsabschnitt 486A, einen zweiten Krümmungsabschnitt 486B, einen dritten Krümmungsabschnitt 486C an den beiden Rohrelementeschenkeln 438A und 438B und an seiner Spitze 438C noch einen vierten Krümmungsabschnitt 486D auf.

Es versteht sich, dass derartige Krümmungsabschnitte 486A, B, C auch an nicht durch eine Spitze 438C miteinander verbundenen Führungselemente 436 und 437 vorgesehen sein können (vgl. Figuren 7 und 8).

Insbesondere durch die ersten drei Krümmungsabschnitte 486A, 486B und 486C, welche an beiden Rohrelementeschenkel 438A und 438B vorhanden sind, gelingt es, das Rückenlehnenoberteil 17 (siehe insbesondere Figuren 1a, 1b und 2a, 2b) entlang einer mehrfach gebogenen bzw. gekrümmten Verlagerungskurve 27 derart verschieben zu können, dass hierbei auch andere Bauteile bzw. Komponenten, welche sich seitlich neben der Rückenlehne 3 befinden, umfahren werden können, während das Rückenlehnenoberteil 17 von seiner mittigen Parkposition 28 in seine außermittige Abstützlage 29 hinein geschoben wird, oder umgekehrt.

Hierbei ist der erste Rohrelementschenkel 438A durch die beiden Festlager-Rollenelemente 467 und durch das Loslager-Rollenelement 468 gelagert, während der zweite Rollenelementeschenkel 438B lediglich durch das Einzelrollenelement 479 geführt bzw. gelagert ist.

Die beiden Festlager-Rollenelemente 467 sind jeweils mit einem in einem Gehäuse 467 des Rollenhalteapparats 460 festgelegten Drehachsenelemente 469 drehbar festgelegt. Das Loslager-Rollenelement 468 ist hierbei in einem Langloch 471 mittels eines verlagerbaren Drehachsenelements 472 in dem Gehäuse 467 gelagert, wobei das verlagerbare Drehachsenelement 472 mittels eines Blattfederelements 473 vorgespannt ist. Das Blattfederelement ist hierzu zwischen dem verlagerbaren Drehachsenelement 472 und zwei seitlich davon positionierten Spannstegelementen 474 entsprechend eingeklemmt.

Die beiden Rohrelementeschenkel 438A und 438B sind an dem zweiten Ende 426B der Linearrollenführungseinrichtung 426 mittels eines Flanschelements 475 fest aber lösbar miteinander verbunden (siehe Figur 16).

Wie nach der Darstellung gemäß der Figur 17 gut zu erkennen ist, sind die ortsfesten Drehachsenelemente 469 und das verlagerbare Drehachsenelement 472 anders im Raum 485 orientiert angeordnet als ein weiteres ortsfestes Drehachsenelement 482 des Einzelrollenelements 479. Und zwar kann man nach der Darstellung gemäß der Figur 17 gut erkennen, dass das weitere ortsfeste Drehachsenelement 482 rechtwinklig gegenüber den anderen Drehachsenelementen 469 und 472 ausgerichtet ist. Hierdurch ergibt sich, dass die mittels der Festlager-Rollenelemente und dem Loslager-Rollenelement 468 definierten ersten Führungsflächen 483 gegenüber einer durch das Einzelrollenelement 479 definierten weiteren Führungsfläche 484 ebenfalls anders orientiert im Raum 485 an der Linearrollenführungseinrichtung 426 ausgerichtet angeordnet sind.

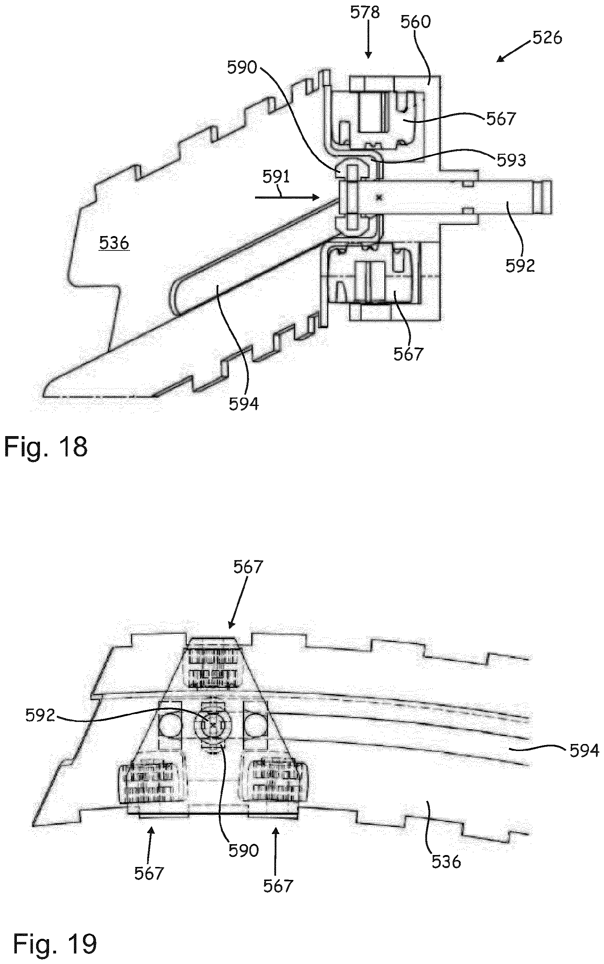

Bei dem in den Figuren 18 und 19 gezeigten sechsten Ausführungsbeispiel ist ein Spielausgleich zwischen einer Rollenelementeanordnung 578 und einem Führungselement 536 einer sechsten möglichen Linearrollenführungseinrichtung 526 mittels eines zusätzlichen Gleitelements 590 bewerkstelligt, mithilfe welchem das Führungselement 536 stets in Anpressrichtung 551 gegen die Festlager-Rollenelemente 567 der Rollenelementeanordnung 578 gedrückt wird.

Die Festlager-Rollenelemente 567 sind hierbei in einem Rollenhalteapparat 560 der Linearrollenführungseinrichtung 526 gehaltert. Ebenso ist das zusätzliche Gleitelement 590 in diesem Rollenhalteapparat 560 federbelastet gelagert, wozu das zusätzliche Gleitelement 590 an einem beweglichen Rückzugsstiftelement 592 angeordnet sind. Das Rückzugsfederelement 592, welches das gesamte Rückzugsstiftelement 592 in Anpressrichtung 591 vorspannt, ist hierbei nicht eingezeichnet.

Bei dieser fünften möglichen Linearrollenführungseinrichtung 526 besteht das Führungselement 536 aus einer Blechkonstruktion mit einer Gleitnut 593, in welcher das zusätzliche Gleitelement 590 angeordnet ist. Darüber hinaus weist das Führungselement 536 noch eine längliche Materialausnehmung 594 auf, die sich in Längserstreckung des Führungselements 536 erstreckt. Durch diese längliche Materialausnehmung 594 ist das Rückzugsstiftelement 592 durch das Führungselement 536 hindurch geführt, sodass das zusätzliche Gleitelement 590 aus Richtung des Rollenhalteapparats 560 durch das Führungselement 536 hindurch in der Gleitnut 593 positioniert und gehalten werden kann.

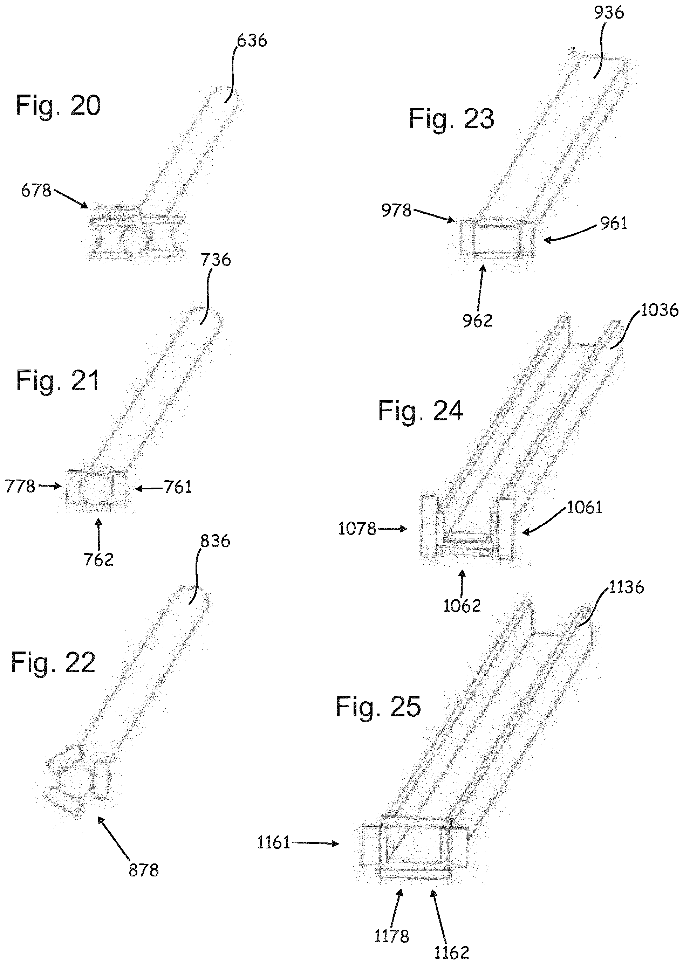

Nach den Darstellungen gemäß der Figuren 20 bis 25 sind noch eine Vielzahl an möglichen Führungselementegeometrien sowie mögliche Rollenelementegeometrien und -anordnungen sowie die Anzahl der verbauten Rollenelemente dargestellt.
Bei dem in der Figur 20 dargestellten Führungselement 636 handelt es sich um eine Rundstange aus einem Vollmaterial. Dieses Führungselement 636 ist mittels einer Rollenelementeanordnung 678 aus drei identischen konkav ausgebildeten Rollenelementen (hier nicht gesondert beziffert) geführt.

Bei dem in der Figur 21 gezeigten Führungselement 736 aus einer Vollmaterialrundstange ist eine andere Rollenelementeanordnung 778 aus insgesamt vier Tonnen-Rollenelemente (hier nicht gesondert beziffert) gezeigt, wobei die vier Tonnen-Rollenelemente konzentrisch um das Führungselement 736 herum angeordnet sind. Zwei der vier Tonnen-Rollenelemente bilden hierbei ein erstes Rollenelementepaar 761 haben einen größeren Durchmesser als zwei andere der vier Tonnen-Rollenelemente, wobei die Tonnen-Rollenelemente mit dem gleichen Durchmesser sich gegenüberliegend angeordnet sind. Die zwei anderen Tonnen-Rollenelemente bilden das zweite Rollenelementepaar 762.

Bei dem Ausführungsbeispiel gemäß der Figur 22 besteht ein Führungselement 836 wieder aus einem Rundstangenvollmaterial, wobei dieses Führungselement 836 mit drei Tonnen-Rollenelementen (nicht gesondert beziffert) gelagert und geführt ist. Die drei Tonnen-Rollenelemente sind konzentrisch um das runde Führungselement 836 herum angeordnet und haben alle einen identischen Durchmesser. Insofern ist das Führungselement 836 durch eine Rollenelementeanordnung 878 aus drei identischen Tonnen-Rollenelementen geführt und gelagert.

Bei dem in der Figur 23 gezeigten Führungselement 936 handelt es sich um eine rechteckiges Vollmaterialstange, welche mittels einer Rollenelementeanordnung 978 bestehend aus zwei Rollenelementepaaren 961 und 962 mit insgesamt vier Tonnen-Rollenelemente (nicht gesondert beziffert) gelagert ist. Hierbei haben zwei der vier Tonnen-Rollenelemente wieder einen identischen Durchmesser, wobei diese zwei Tonnen-Rollenelemente sich jeweils als Rollenelementepaar 961 bzw. 962 einander gegenüber liegen.

Das in der Figur 24 gezeigte Führungselement 1036 ist u-förmig ausgestaltet und mittels einer anderen Rollenelementeanordnung 1078 aus zwei Rollenelementepaaren 1061 und 1062 gelagert und geführt, wobei diese Rollenelementeanordnung 1078 wieder vier Tonnen-Rollenelemente (nicht gesondert beziffert) umfasst. Hierbei sind zwei der vier Tonnen-Rollenelemente identisch (Rollenelementepaar 1061) und zwei der vier Tonnen-Rollenelemente darüber hinaus verschieden (Rollenelementepaar 1062) aufgebaut, wobei eines der verschiedenen Tonnen-Rollenelemente innerhalb des Führungselements 1036 angeordnet und demnach zumindest teilweise von drei Schenkeln des Führungselements 1036 umgeben ist, wodurch diese Rollenelementeanordnung 1078 sehr kompakt baut.

Bei dem in der Figur 25 gezeigten Ausführungsbeispiel ist das Führungselement 1136 wieder u-förmig ausgestaltet; jedoch sind die Tonnen-Rollenelemente dieser Rollenelementeanordnung 1178 vollständig umfangsseitig des Führungselements verteilt angeordnet. Die Rollenelementeanordnung 1178 besteht hierbei wieder aus zwei Rollenelementepaaren 1161 und 1162, wobei die einzelnen Tonnen-Rollenelemente des jeweiligen Rollenelementepaars 1161 bzw. 1162 identisch ausgeführt sind.

Es versteht sich, dass es sich bei den vorstehend erläuterten Ausführungsbeispielen lediglich um erste Ausgestaltungen des erfindungsgemäßen Fahrzeugsitzes bzw. von Führungsrolleneinrichtungen und deren Komponenten handelt. Insofern beschränkt sich die Ausgestaltung der Erfindung nicht auf diese Ausführungsbeispiele.

### Bezugszeichenliste

- 1: Fahrzeugsitz
- 1 A: Nutzfahrzeugsitz
- 2: Sitzteil
- 3: Rückenlehne
- 4: rechter Seitenrand
- 5: Armlehne
- 6: Nutzkraftfahrzeug
- 7: Hauptsitzrichtung
- 10: Sitzteilpolsterelement
- 11: Sitzteilfläche
- 15: Gesamthöhe
- 16: Rückenlehnenunterteil
- 17: Rückenlehnenoberteil
- 18: Unterteilpolsterelement
- 19: erster äußerer Wangenbereich
- 20: zweiter äußerer Wangenbereich
- 21: konturierte Unterteilfläche
- 22: Oberteilpolsterelement
- 23: glatte Oberfläche
- 25: Haltevorrichtung
- 25A: erstes Haltebügelelement
- 25B: zweites Haltebügelelement
- 25C: Halteplattenelement
- 26: Führungsrolleneinrichtung
- 26A: Gehäuseelement
- 26B: erste Ende
- 26C: zweites Ende
- 27: fiktive Verlagerungskurve
- 28: mittige Parkposition
- 29: außermittige Abstützlage
- 30: Ausgangslage
- 31: Vertikalmittelachse
- 32: Endlage
- 33: erste Neigungsrichtung
- 34: Querachse
- 35: zweite Neigungsrichtung
- 36: erstes Führungselement
- 37: zweites Führungselement
- 38: Rohrelement
- 39: Schnittdarstellungen
- 40: Halteeinrichtung
- 41: Halteblechelement
- 42: erster Rollenelementehalter
- 43: zweiter Rollenelementehalter
- 44: dritter Rollenelementehalter
- 45: Verschieberichtung
- 50: gemeinsame Vertikalebene
- 51: Vertikalparallelebene
- 52: erster Achsversatz
- 53: erster Neigungswinkel
- 54: erste Zwischenlage
- 55: größerer Achsversatz
- 56: zweite Zwischenlage
- 57: größerer Neigungswinkel
- 58: maximaler Achsversatz
- 59: maximaler Neigungswinkel
- 70: Fahrzeugführerrumpfabstützeinrichtung

- 126: zweite mögliche Linearführungseinrichtung
- 126B: erstes Ende
- 126C: zweites Ende
- 180: erstes Rundstangenelement
- 181: zweites Rundstangenelement

- 226: dritte mögliche Linearführungseinrichtung
- 226B: erstes Ende
- 226C: zweites Ende
- 225: Haltevorrichtung
- 225C: Halteplattenelement
- 236: erstes Führungselement
- 237: zweites Führungselement
- 240: Halteeinrichtung
- 241: Halteblechelement
- 260: Rollenhalteapparat
- 261: erstes Rollenelementepaar
- 262: zweites Rollenelementepaar
- 263: erste Führungsbahn
- 264: zweite Führungsbahn
- 265: drittes Rollenelementepaar
- 266: viertes Rollenelementepaar
- 267: Festlager-Rollenelement
- 268: Loslager- Rollenelement
- 269: ortsfestes Drehachsenelement
- 271: Langloch
- 272: verlagerbares Drehachsenelement
- 273: Blattfederelement
- 274: Spannstegelemente
- 275: Flanschelemente
- 276: massives Gehäuse
- 277: massive Plattensegmente

- 325: Haltevorrichtung
- 325C: Halteplattenelement
- 326: vierte mögliche Führungsrolleneinrichtung
- 336: erstes Führungselement
- 337: zweites Führungselement
- 338: Halteeinrichtung
- 341: Halteblechelement
- 360: Rollenhalteapparat
- 361: erstes Rollenelementepaar
- 362: zweites Rollenelementepaar
- 363: erste Führungsbahn
- 364: zweite Führungsbahn
- 367: Festlager- Rollenelement
- 368: Loslager- Rollenelement
- 369: ortsfeste Drehachsenelemente
- 371: Langlöcher
- 372: verlagerbare Drehachsenelemente
- 373: Blattfederelement
- 374: Spannstegelement
- 375: Flanschelement
- 376: Gehäuse
- 376A: Gehäuseunterteil
- 378: Rollenelementeanordnung
- 379: Einzelrollenelement
- 382: weiteres ortsfestes Drehachsenelement
- 383: erste Führungsflächen
- 384: weitere Führungsflächen
- 385: Raum

- 425: Haltevorrichtung
- 425C: Halteplattenelement
- 426: fünfte mögliche Linearrollenführungseinrichtung
- 426B: erstes Ende
- 426C: zweites Ende
- 436: erstes Führungselement
- 437: zweites Führungselement
- 438: u-förmiges Rohrelement
- 438A: erster Rohrelementschenkel
- 438B: zweiter Rohrelementschenkel
- 438C: u-förmige Spitze
- 440: Halteeinrichtung
- 441: Halteblechelement
- 467: Festlager-Rollenelement
- 468: Loslager-Rollenelement
- 469: ortsfestes Drehachsenelement
- 471: Langloch
- 472: verlagerbares Drehachsenelement
- 473: Blattfederelement
- 474: Spannstegelemente
- 475: Flanschelement
- 476: massives Gehäuse
- 478: Rollenelementeanordnung
- 479: Einzelrollenelement
- 482: weiteres ortsfestes Drehachsenelement
- 483: erste Führungsflächen
- 484: weitere Führungsfläche
- 485: Raum
- 486A: erster Krümmungsabschnitt
- 486B: zweiter Krümmungsabschnitt
- 486C: dritter Krümmungsabschnitt
- 486D: vierter Krümmungsabschnitt
- 526: sechste mögliche Linearrollenführungseinrichtung
- 536: Führungselement
- 560: Rollenhalteapparat
- 567: Festlager-Rollenelemente
- 578: Rollenelementeanordnung
- 590: zusätzliches Gleitelement
- 591: Anpressrichtung
- 592: Rückzugsstiftelement
- 593: Gleitnut

- 594: längliche Materialausnehmung

- 636: Führungselement
- 678: Rollenelementeanordnung

- 736: Führungselement
- 761: erstes Rollenelementepaar
- 762: zweites Rollenelementepaar
- 778: Rollenelementeanordnung

- 836: Führungselement
- 878: Rollenelementeanordnung

- 936: Führungselement
- 961: erstes Rollenelementepaar
- 962: zweites Rollenelementepaar
- 978: Rollenelementeanordnung

- 1036: Führungselement
- 1061: erstes Rollenelementepaar
- 1062: zweites Rollenelementepaar
- 1078: Rollenelementeanordnung

- 1136: Führungselement
- 1161: erstes Rollenelementepaar
- 1162: zweites Rollenelementepaar
- 1178: Rollenelementeanordnung

## Patentansprüche

1. Fahrzeugsitz (1), insbesondere Nutzkraftfahrzeugsitz (1A), mit einem Sitzteil (2), mit einer Rückenlehne (3) umfassend ein Rückenlehnenunterteil (16) und ein Rückenlehnenoberteil (17), und mit einer Haltevorrichtung (25), mittels welcher das Rückenlehnenoberteil (17) gegenüber dem Rückenlehnenunterteil (16) verlagerbar gehaltert ist, wobei
die Haltevorrichtung (25) eine Führungsrolleneinrichtung (26; 126; 226; 326; 426; 526) aufweist, mittels welcher das Rückenlehnenoberteil (17) gegenüber dem Rückenlehnenunterteil (16) entlang einer Verlagerungskurve (27) beweglich angeordnet ist, um das Rückenlehnenoberteil (17), zumindest teilweise bis über den Seitenrand (4A, 4B) des Rückenlehnenunterteils (16) beweglich, zu lagern,
**dadurch gekennzeichnet, dass**
die Führungsrolleneinrichtung (26; 126; 226; 326; 426; 526) eine Rollenelementeanordnung (378; 478; 578; 678; 778; 878; 978; 1078; 1178) zum Führen eines Führungselements (36, 37; 236, 237; 336, 337; 436, 437; 536; 636; 736; 836; 936; 1036; 1136) mit einem oder mehr Festlager-Rollenelemente (267; 367; 467; 567) und mit einem oder mehr Loslager-Rollenelemente (268; 368; 468) umfasst.

2. Fahrzeugsitz (1) nach Anspruch 1,
**dadurch gekennzeichnet, dass**
die Führungsrolleneinrichtung (26; 126; 226; 326; 426; 526) derart ausgestaltet ist, dass das Rückenlehnenoberteil (17) beim seitlichen Verlagern zusätzlich um zumindest einen Abschnitt der Verlagerungskurve (27) und/oder um eine in einem Winkel zur Verlagerungskurve verlaufende, bevorzugt um eine quer zu der Verlagerungskurve (27) verlaufende Querachse (35), dreht.

3. Fahrzeugsitz (1) nach Anspruch 1 oder 2,
**dadurch gekennzeichnet, dass**
die Führungsrolleneinrichtung (26; 126; 226; 326; 426; 526) zumindest teilweise helixförmig ausgestaltet ist.

4. Fahrzeugsitz (1) nach einem der Ansprüche 1 bis 3,
**dadurch gekennzeichnet, dass**
die Führungsrolleneinrichtung (26; 126; 226; 326; 426; 526) zwei übereinander und voneinander beabstandet angeordnete Führungselemente (36, 37; 236, 237; 336, 337; 436, 437; 536; 636; 736; 836; 936; 1036; 1136) umfasst, wobei eines der Führungselemente (36, 37; 236, 237; 336, 337; 436, 437; 536; 636; 736; 836; 936; 1036; 1136) im Verlauf der Verlagerungskurve (27) gegenüber dem anderen der Führungselemente (36, 37; 236, 237; 336, 337; 436, 437; 536; 636; 736; 836; 936; 1036; 1136) verschieden positioniert ist.

5. Fahrzeugsitz (1) nach einem der Ansprüche 1 bis 4,
**dadurch gekennzeichnet, dass**
die Führungsrolleneinrichtung (26; 126; 226; 326; 426; 526) eine Rollenelementeanordnung (378; 478; 578; 678; 778; 878; 978; 1078; 1178) zum Führen eines Führungselements (36, 37; 236, 237; 336, 337; 436, 437; 536; 636; 736; 836; 936; 1036; 1136) mit zwei Festlager-Rollenelementen (267; 367; 467; 567) und wenigstens einem Loslager-Rollenelement (268; 368; 468) umfasst, oder umgekehrt.

6. Fahrzeugsitz (1) nach einem der Ansprüche 1 bis 5,
**dadurch gekennzeichnet, dass**
zwei Loslager-Rollenelemente (268; 368) durch ein gemeinsames Federelement, insbesondere durch ein einziges Blattfederelement (273; 373; 473), gegenüber wenigstens einem Festlager-Rollenelement (267; 367) vorgespannt angeordnet ist.

7. Fahrzeugsitz (1) nach einem der Ansprüche 1 bis 6,
**dadurch gekennzeichnet, dass**
die Führungsrolleneinrichtung (26; 126; 226; 326; 426; 526) wenigstens ein Rollenelementepaar mit einem ortsfesten Rollenelement und mit einem gegenüber dem ortsfesten Rollenelement verlagerbaren Rollenelement umfasst, wobei das verlagerbare Rollenelement insbesondere federvorgespannt gelagert ist.

8. Fahrzeugsitz (1) nach einem der Ansprüche 1 bis 7,
**dadurch gekennzeichnef, dass**
die Führungsrolleneinrichtung (26; 126; 226; 326; 426; 526) einen Rollenhalteapparat (260; 360; 460; 560) umfasst, an welchem Rollenelementeanordnungen (378; 478; 578; 678; 778; 878; 979; 1078; 1178) und/oder Rollenelementepaare (261, 262, 265, 266; 361, 362; 461, 462) von wenigstens zwei voneinander beabstandeten Führungsbahnen (263, 264; 363, 364; 463, 464) zum Führen von wenigstens zwei nebeneinander und voneinander beabstandet angeordneten Führungselementen (36, 37; 236, 237; 336, 337; 436, 437; 536; 636; 736; 836; 936; 1036; 1136) gehaltert sind.

9. Fahrzeugsitz (1) nach einem der Ansprüche 1 bis 8,
**dadurch gekennzeichnet, dass**
die Führungsrolleneinrichtung (26; 126; 226; 326; 426; 526) wenigstens zwei voneinander beabstandete Führungsbahnen (263, 264; 363, 364; 463, 464) zum Führen von wenigstens zwei nebeneinander und voneinander beabstandet angeordneten Führungselementen (36, 37; 236, 237; 336, 337; 436, 437; 536; 636; 736; 836; 936; 1036; 1136) umfasst, wobei wenigstens ein Rollenelement (367, 368; 467, 468) einer der zwei voneinander beabstandeten Führungsbahnen (263, 264; 363, 364; 463, 464) gegenüber wenigstens einem Rollenelement (379; 479) einer anderen der zwei voneinander beabstandeten Führungsbahnen (263, 264; 363, 364; 463, 464) hinsichtlich ihrer Führungsflächen (383, 384; 483, 484) unterschiedlich im Raum (385; 495) orientiert sind.

10. Fahrzeugsitz (1) nach einem der Ansprüche 1 bis 9,
**dadurch gekennzeichnet, dass**
Drehachsen (369, 372; 469, 472) von Rollenelementen (367, 368; 467, 468) zum Führen eines ersten Führungselements (336; 436) und wenigstens eine Drehachse (382; 482) von Rollenelementen (379; 479) zum Führen eines weiteren Führungselements (337; 437) unterschiedlich im Raum (385; 495) orientiert, insbesondere rechtwinkelig zueinander im Raum (385; 495) ausgerichtet, sind.

11. Nutzkraftfahrzeug (6), insbesondere landwirtschaftliches Nutzkraftfahrzeug, mit wenigstens einem Fahrzeugsitz (1),
**gekennzeichnet, durch**
einen Fahrzeugsitz (1) nach einem der vorhergehenden Ansprüche.

## Claims

1. Vehicle seat (1), in particular a commercial motor vehicle seat (1 A), comprising a seat part (2), a backrest (3) that has a lower backrest part (16) and an upper backrest part (17), and a holding device (25), by means of which the upper backrest part (17) is mounted so as to be movable with respect to the lower backrest part (16),
the holding device (25) comprising a guide roller apparatus (26; 126; 226; 326; 426; 526), by means of which the upper backrest part (17) is arranged so as to be movable along a displacement curve (27) with respect to the lower backrest part (16) in order to mount the upper backrest part (17) so as to be movable at least in part as far as beyond the side edge (4A, 4B) of the lower backrest part (16),
**characterised in that**
the guide roller apparatus (26; 126; 226; 326; 426; 526) comprises a roller element arrangement (378; 478; 578; 678; 778; 878; 978; 1078; 1178) for guiding a guide element (36, 37; 236, 237; 336, 337; 436, 437; 536; 636; 736; 836; 936; 1036; 1136) and has one or more locating bearing roller elements (267; 367; 467; 567) and one or more floating bearing roller elements (268; 368; 468).

2. Vehicle seat (1) according to claim 1,
**characterised in that**
the guide roller apparatus (26; 126; 226; 326; 426; 526) is designed such that, when moved to the side, the upper backrest part (17) additionally rotates about at least a portion of the displacement curve (27) and/or about a transverse axis (35) that extends at an angle to the displacement curve, preferably transversely to the displacement curve (27).

3. Vehicle seat (1) according to either claim 1 or claim 2,
**characterised in that**
the guide roller apparatus (26; 126; 226; 326; 426; 526) is helical at least in part.

4. Vehicle seat (1) according to any of claims 1 to 3,
**characterised in that**
the guide roller apparatus (26; 126; 226; 326; 426; 526) comprises two guide elements (36, 37; 236, 237; 336, 337; 436, 437; 536; 636; 736; 836; 936; 1036; 1136) arranged above and at a distance from one another, one of the guide elements (36, 37; 236, 237; 336, 337; 436, 437; 536; 636; 736; 836; 936; 1036; 1136) being positioned differently relative to the other guide element (36, 37; 236, 237; 336, 337; 436, 437; 536; 636; 736; 836; 936; 1036; 1136) on the path of the displacement curve (27).

5. Vehicle seat (1) according to any of claims 1 to 4,
**characterised in that**
the guide roller apparatus (26; 126; 226; 326; 426; 526) comprises a roller element arrangement (378; 478; 578; 678; 778; 878; 978; 1078; 1178) for guiding a guide element (36, 37; 236, 237; 336, 337; 436, 437; 536; 636; 736; 836; 936; 1036; 1136) and has two locating bearing roller elements (267; 367; 467; 567) and at least one floating bearing roller element (268; 368; 468), or vice versa.

6. Vehicle seat (1) according to any of claims 1 to 5,
**characterised in that**
two floating bearing roller elements (268; 368) are arranged so as to be preloaded with respect to at least one locating bearing roller element (267; 367) by a shared spring element, in particular by a single leaf spring element (273; 373; 473).

7. Vehicle seat (1) according to any of claims 1 to 6,
**characterised in that**
the guide roller apparatus (26; 126; 226; 326; 426; 526) comprises at least one roller element pair having a stationary roller element and having a roller element which is movable with respect to the stationary roller element, the movable roller element in particular being mounted in a spring-preloaded manner.

8. Vehicle seat (1) according to any of claims 1 to 7,
**characterised in that**
the guide roller apparatus (26; 126; 226; 326; 426; 526) comprises a roller holding means (260; 360; 460; 560), on which roller element arrangements (378; 478; 578; 678; 778; 878; 979; 1078; 1178) and/or roller element pairs (261, 262, 265, 266; 361, 362; 461, 462) of at least two guide tracks (263, 264; 363, 364; 463, 464) spaced apart from one another are mounted for guiding at least two guide elements (36, 37; 236, 237; 336, 337; 436, 437; 536; 636; 736; 836; 936; 1036; 1136) arranged adjacently to and at a distance from one another.

9. Vehicle seat (1) according to any of claims 1 to 8,
**characterised in that**
the guide roller apparatus (26; 126; 226; 326; 426; 526) comprises at least two guide tracks (263, 264; 363, 364; 463, 464) spaced apart from one another for guiding at least two guide elements (36, 37; 236, 237; 336, 337; 436, 437; 536; 636; 736; 836; 936; 1036; 1136) arranged adjacently to and at a distance from one another, at least one roller element (367, 368; 467, 468) of one of the two guide tracks (263, 264; 363, 364; 463, 464) spaced apart from one another being oriented in the area (385; 495) in a manner that is different, in terms of the guide surfaces (383, 384; 483, 484) of said roller elements, to at least one roller element (379; 479) of another of the two guide tracks (263, 264; 363, 364; 463, 464) spaced apart from one another.

10. Vehicle seat (1) according to any of claims 1 to 9,
**characterised in that**
swivel axis (369, 372; 469, 472) of roller elements (367, 368; 467, 468) for guiding a first guide element (336; 436) and at least one swivel axis (382; 482) of roller elements (379; 479) for guiding a further guide element (337; 437) are oriented differently to one another in the area (385; 495), in particular oriented at right angles to one another in the area (385; 495).

11. Commercial motor vehicle (6), in particular an agricultural commercial motor vehicle, comprising at least one vehicle seat (1),
**characterised by**
a vehicle seat (1) according to any of the preceding claims.

## Revendications

1. Siège de véhicule (1), plus particulièrement siège de véhicule utilitaire (1 A), avec une partie d'assise (2), avec un dossier (3) comprenant une partie inférieure de dossier (16) et une partie supérieure de dossier (17), et avec un dispositif de maintien (25), au moyen duquel la partie supérieure de dossier (17) peut être maintenue mobile par rapport à la partie inférieure de dossier (16),
le dispositif de maintien (25) comprenant un dispositif à galets de guidage (26 ; 126 ; 226; 326; 426; 526) au moyen duquel la partie supérieure du dossier (17) est disposée de manière mobile le long d'une courbe de déplacement (27) par rapport à la partie inférieure de dossier (16), afin de loger la partie supérieure de dossier (17) au moins partiellement jusqu'au-dessus du bord latéral (4A, 4B) de la partie inférieure de dossier (16),
**caractérisé en ce que**
le dispositif à galets de guidage (26 ; 126 ; 226 ; 326 ; 426 ; 526) comprend une disposition d'éléments de galets (378 ; 478 ; 578 ; 678 ; 778 ; 878 ; 978 ; 1078 ; 1178) pour le guidage d'un élément de guidage (36, 37 ; 236, 237 ; 336, 337 ; 436, 437 ; 536 ; 636 ; 736 ; 836 ; 936 ; 1036 ; 1136) avec un ou plusieurs éléments de galets à paliers fixes (267 ; 367 ; 467 ; 567) et avec un ou plusieurs éléments de galets à paliers libres (268 ; 368 ; 468).

2. Siège de véhicule (1) selon la revendication 1,
**caractérisé en ce que**
le dispositif à galets de guidage (26 ; 126 ; 226 ; 326 ; 426 ; 526) est conçu de façon à ce que la partie supérieure de dossier (17) tourne, lors du mouvement latéral, d'au moins une portion de la courbe de déplacement (27) et/ou d'un axe transversal (35) s'étendant avec un angle par rapport à la courbe de déplacement, de préférence transversalement par rapport à la courbe de déplacement (27).

3. Siège dé véhicule (1) selon la revendication 1 ou 2,
**caractérisé en ce que**
le dispositif à galets de guidage (26 ; 126 ; 226 ; 326 ; 426 ; 526) est conçu de manière au moins hélicoïdale.

4. Siège de véhicule (1) selon l'une des revendications 1 à 3,
**caractérisé en ce que**
le dispositif à galets de guidage (26 ; 126 ; 226 ; 326 ; 426 ; 526) comprend deux éléments de guidage (36, 37 ; 236, 237 ; 336, 337 ; 436, 437 ; 536 ; 636 ; 736 ; 836 ; 936 ; 1036 ; 1136) superposés et disposés à une certaine distance l'un de l'autre, un des éléments de guidage (36, 37 ; 236, 237 ; 336, 337 ; 436, 437 ; 536 ; 636 ; 736 ; 836 ; 936 ; 1036 ; 1136) étant positionné différemment dans l'extension de la courbe de déplacement (27) par rapport à l'autre élément de guidage (36, 37 ; 236, 237 ; 336, 337 ; 436, 437 ; 536 ; 636 ; 736 ; 836 ; 936 ; 1036 ; 1136).

5. Siège de véhicule (1) selon l'une des revendications 1 à 4,
**caractérisé en ce que**
le dispositif à galets de guidage (26 ; 126 ; 226 ; 326 ; 426 ; 526) comprend une disposition d'éléments de galets (378 ; 478 ; 578 ; 678 ; 778 ; 878 ; 978 ; 1078 ; 1178) pour le guidage d'un élément de guidage (36, 37 ; 236, 237 ; 336, 337 ; 436, 437 ; 536 ; 636 ; 736 ; 836 ; 936 ; 1036 ; 1136) avec deux éléments de galets à paliers fixes (267 ; 367 ; 467 ; 567) et au moins un élément de galet à palier libre (268 ; 368 ; 468) ou inversement.

6. Siège de véhicule (1) selon l'une des revendications 1 à 5,
**caractérisé en ce que**
deux éléments de galets à paliers libres (268 ; 368) sont précontraints par un élément de ressort commun, plus particulièrement par un seul élément de ressort à lames (273 ; 373 ; 473) par rapport à au moins un élément de galet à palier fixe (267 ; 367).

7. Siège de véhicule (1) selon l'une des revendications 1 à 6,
**caractérisé en ce que**
le dispositif à galets de guidage (26 ; 126 ; 226 ; 326 ; 426 ; 526) comprend au moins une paire d'éléments de galets avec un élément de galet fixe et avec un élément de galet mobile par rapport à l'élément de galet fixe, l'élément de galet mobile étant logé plus particulièrement de manière précontrainte avec un ressort.

8. Siège de véhicule (1) selon l'une des revendications 1 à 7,
**caractérisé en ce que**
le dispositif à galets de guidage (26; 126; 226; 326; 426; 526) comprend un appareil de maintien de galets (260 ; 360 ; 460 ; 560) sur lequel des dispositions d'éléments de galets (378 ; 478 ; 578 ; 678 ; 778 ; 878 ; 979 ; 1078 ; 1178) et/ou des paires d'éléments de galets (261, 262, 265, 266 ; 361, 362 ; 461, 462) sont maintenus par au moins deux pistes de guidage (263, 264 ; 363, 364 ; 463, 464) écartées d'une certaine distance entre elles, pour le guidage d'au moins deux éléments de guidage (36, 37 ; 236, 237 ; 336, 337 ; 436, 437 ; 536 ; 636 ; 736 ; 836 ; 936 ; 1036 ; 1136) écartés d'une certaine distance entre eux.

9. Siège de véhicule (1) selon l'une des revendications 1 à 8,
**caractérisé en ce que**
le dispositif à galets de guidage (26 ; 126 ; 226 ; 326 ; 426 ; 526) comprend au moins deux pistes de guidage (263, 264 ; 363, 364 ; 463, 464), écartées d'une certaine distance entre elles, pour le guidage d'au moins deux éléments de guidage (36, 37 ; 236, 237 ; 336, 337 ; 436, 437 ; 536 ; 636 ; 736 ; 836 ; 936 ; 1036 ; 1136) juxtaposés et écartés d'une certaine distance entre eux, au moins un élément de galet (367, 368 ; 467, 468) d'une des pistes de guidage (263, 264 ; 363, 364 ; 463, 464), écartées d'une certaine distance entre elles, étant orienté différemment dans l'espace (385 ; 495), par rapport à au moins un élément de galet (379 ; 479) d'une autre des pistes de guidage (263, 264 ; 363, 364 ; 463, 464), en ce qui concerne ses surfaces de guidage (383, 384 ; 483, 484).

10. Siège de véhicule (1) selon l'une des revendications 1 à 9,
**caractérisé en ce que**
des axes de rotation (369, 372 ; 469, 472) des éléments de galets (367, 368 ; 467, 468) pour le guidage d'un premier élément de guidage (336 ; 436) et au moins un axe de rotation (382 ; 482) d'éléments de galets (379 ; 479) pour le guidage d'un autre élément de guidage (337 ; 437) sont orientés différemment dans l'espace (385 ; 495) plus particulièrement sont orientés perpendiculairement entre eux dans l'espace (385 ; 495).

11. Véhicule utilitaire (6), plus particulièrement véhicule utilitaire avec au moins un siège de véhicule (1),
**caractérisé par**
un siège de véhicule (1) selon l'une des revendications précédentes.
